# EUROPEAN PATENT APPLICATION

(11) **EP 4 841 298 A1**
(43) Date of publication of application: **18.11.2026**
(21) Application number: 25741402.9
(22) Date of filing: 09.01.2025
(51) Int. Cl.: G01S 7/48, G01S 17/08

(54) **RECEIVING MODULE, RADAR, TERMINAL, AND VEHICLE END**

(30) Priority: 19.01.2024 CN 202410082985
(71) Applicant: Yinwang Intelligent Technologies Co., Ltd., Shenzhen, Guangdong 518110 (CN)
(72) Inventor: LIU, Jun, Shenzhen, Guangdong 518129 (CN); NIU, Haoyun, Shenzhen, Guangdong 518129 (CN); ZHENG, Bin, Shenzhen, Guangdong 518129 (CN)
(74) Representative: Henselmann, Alexander Gerhard
(86) International application number: PCT/CN2025/071435
(87) International publication number: WO 2025/152840

(57) **Abstract**

A receiving module (200), a radar, a terminal, and a vehicle end are provided, related to the technical field of lidar. The receiving module (200) includes an optical element and a detector (201), and the receiving module (200) is configured to receive a line-shaped light beam extending along a first direction. The optical element is configured to impart astigmatism to a first light beam in a second direction, and/or impart field curvature to the first light beam. The detector (201) receives, by using a plurality of monitoring regions, a light beam passing through the optical element, and the detector (201) is located on a target focal plane of the optical element. A dynamic range of imaging can be ensured by diverging the first light beam in the second direction through astigmatism and diverging a light beam in a marginal field of view through field curvature. The detector (201) is placed on the target focal plane of the optical element, so that based on a pixel configuration on the detector (201), the receiving module (200) has a high-resolution receiving capability. Accordingly, the optical element provided in this solution does not need a complex manufacturing process, has a simple structure and low manufacturing costs, and can achieve a low-cost design of a high-resolution lidar.

## Description

This application claims priority to Chinese Patent Application No. 202410082985.0, filed with the China National Intellectual Property Administration on January 19, 2024, and entitled "RECEIVING MODULE, RADAR, TERMINAL, AND VEHICLE END", which is incorporated herein by reference in its entirety.

### TECHNICAL FIELD

This application relates to the technical field of lidar, and in particular, to a receiving module, a radar, a terminal, and a vehicle end.

### BACKGROUND

A lidar, also known as an optical radar, is short for light detection and ranging (light detection and ranging, Lidar) system. The lidar uses light as a detection medium, and implements detection of a target, for example, ranging, speed measurement, or azimuth angle measurement, through laser emission and reception.

A scanning mode of the lidar includes one-dimensional scanning and two-dimensional scanning. The one-dimensional scanning mode may improve detection resolution of a region of interest (region of interest, ROI) based on diffractive optical elements (diffractive optical elements, DOE). The two-dimensional scanning mode requires controlling a scanning mirror to perform non-uniform motion in two dimensions, thereby realizing high-resolution detection of the ROI.

The DOE suffers from high difficulty in manufacturing process and poor temperature reliability, and the foregoing two-dimensional scanning mode involves complicated control logic. Therefore, realizing high-resolution reception by the lidar through a low-cost solution with simple control logic is an urgent issue to be solved currently.

### SUMMARY

This application provides a receiving module, a radar, a terminal, and a vehicle end, relating to the technical field of lidar. The receiving module is based on a one-dimensional line-shaped-light-spot scanning architecture, and realizes high-resolution reception for a lidar.

**According to a first aspect,** this application provides a receiving module. The receiving module includes an optical element and a detector. The receiving module is configured to receive a line-shaped light beam (a first light beam) extending along a first direction. The optical element is configured to impart astigmatism to a first light beam in a second direction, and/or impart field curvature to the first light beam. The detector receives, by using a plurality of monitoring regions, the light beam passing through the optical element. The plurality of monitoring regions have different pixel shapes, and the detector is located on a target focal plane of the optical element. Further, the first direction and the second direction are perpendicular to each other.

The receiving module according to this application is configured to receive a line-shaped light beam (referred to as a first light beam for short) extending along a first direction, so that the receiving module is applicable to a one-dimensional line-shaped-light-spot scanning architecture. The optical element imparts astigmatism to the first light beam in the second direction, thereby enabling divergence of the first light beam in the second direction. The optical element imparts field curvature to the first light beam, thereby enabling divergence of the first light beam in the first direction and the second direction. It may be understood that, divergence intensity applied to the first light beam by astigmatism is proportional to a distance between a light spot and an optical axis. For example, a light spot near the optical axis (a central field of view) is least affected by the astigmatism, while a light spot in a marginal field of view is most affected by the astigmatism. The divergence intensity applied to the first light beam by field curvature is proportional to the distance between a light spot and the optical axis. For example, a light spot near the optical axis is substantially unaffected by the field curvature. As a further example, a light spot located in a marginal field of view, under the effect of field curvature, generates large-scale divergence in the first direction and the second direction. It can be learned that the optical element also applies different divergence intensities to the first light beam at different positions. Correspondingly, the detector receives, by using a plurality of monitoring regions, the light beam passing through the optical element, and the plurality of monitoring regions have different pixel shapes, so that the detector can accurately receive the light beam passing through the optical element for subsequent imaging.

With reference to that the detector is located on a target focal plane of the optical element, it may be learned that a light spot located near the optical axis in the first direction does not generate divergence. In addition, as the line-shaped light beam for the detector extends along the first direction, thereby enabling the receiving module to have a high-resolution reception capability. Further, the foregoing optical element is configured to impart astigmatism and/or field curvature to a line-shaped light beam, so that the optical element requires no complex manufacturing process, and has a simple structure and low manufacturing costs.

In conclusion, the receiving module according to this application utilizes the one-dimensional line-shaped-light-spot scanning structure, thereby achieving high-resolution reception of a lidar and realizing a low-cost design of a high-resolution lidar. Furthermore, since the receiving module according to this application is based on a one-dimensional line-shaped-light-spot scanning structure and requires no complex optical element, the receiving module according to this application further helps implement a miniaturization design of a high-resolution lidar.

In a possible implementation, the plurality of monitoring regions include a first monitoring region and a second monitoring region. In the first direction, a length of a pixel in the first monitoring region is less than a length of a pixel in the second monitoring region.

In an implementation of this application, in the first direction, the length of the pixel in the first monitoring region is less than the length of the pixel in the second monitoring region, thereby making pixel density of the first monitoring region in the first direction greater than pixel density of the second monitoring region, such that an imaging resolution corresponding to the first monitoring region is higher than an imaging resolution corresponding to the second monitoring region.

Optionally, the first monitoring region is, for example, a monitoring region through which the optical axis of the optical element passes, or a monitoring region including a central field of view. The second monitoring region is, for example, a monitoring region that is far away from the optical axis of the optical element, or a monitoring region including a marginal field of view.

Optionally, the first monitoring region is, for example, an ROI region, and the second monitoring region is, for example, another monitoring region other than the ROI region within the plurality of monitoring regions. In the first direction, a pixel length of the ROI region is less than a pixel length of another monitoring region, so that imaging corresponding to the ROI region can have a high imaging resolution.

Optionally, in the first direction, a length of the light spot received by the first monitoring region is less than a length of the light spot received by the second monitoring region.

In another possible implementation, in the first direction, the length of the pixel in the first monitoring region is greater than the length of the pixel in the second monitoring region.

In the foregoing implementation, in the second direction, the length of the pixel in the first monitoring region is greater than the length of the pixel in the second monitoring region, so as to ensure a dynamic range of the imaging corresponding to the first monitoring region.

Optionally, the first monitoring region is, for example, an ROI region, and the second monitoring region is, for example, another monitoring region other than the ROI region within the plurality of monitoring regions. In the second direction, a pixel length of the ROI region is greater than a pixel length of another monitoring region, so as to ensure a dynamic range of the imaging corresponding to the ROI region.

Optionally, in the second direction, the length of the light spot received by the first monitoring region is greater than the length of the light spot received by the second monitoring region.

In another possible implementation, an area of the pixel in the first monitoring region is equal to an area of the pixel in the second monitoring region.

In an implementation of this application, the area of the pixel in the first monitoring region is equal to the area of the pixel in the second monitoring region, so that pixels in different monitoring regions receive the same area (quantity) of light beams, thereby ensuring that dynamic imaging ranges corresponding to different monitoring regions are the same, and facilitating subsequent imaging processing (for example, operations such as splicing, fusion, encoding, and the like).

In another possible implementation, in the second direction, the length of the pixel in the first monitoring region is equal to the length of the pixel in the second monitoring region.

In an implementation of this application, in the second direction, the length of the pixel in the first monitoring region is equal to the length of the pixel in the second monitoring region, so that imaging corresponding to the first monitoring region and the second monitoring region has a high dynamic range.

Optionally, in the second direction, the length of the light spot received by the first monitoring region is equal to the length of the light spot received by the second monitoring region.

In another possible implementation, a length a of the pixel in the first monitoring region in the first direction and a length b of the pixel in the second direction satisfy the following relationship: b=L*a, where L is greater than or equal to 2.

In an implementation of this application, in the first monitoring region, the length a of the pixel in the first direction and the length b of the pixel in the second direction satisfy the following relationship: b=L*a, where L is greater than or equal to 2. This enables the pixel in the first monitoring region to receive a line-shaped light beam that undergoes large-scale divergence in the second direction. For example, the pixel in the first monitoring region can receive a line-shaped light beam that is acted upon by astigmatism, a cylindrical lens, or a cylindrical microlens array, where the line-shaped light beam extends along the first direction, and the astigmatism, the cylindrical lens, or the cylindrical microlens array is configured to diverge the line-shaped light beam in the second direction.

Optionally, the foregoing L is equal to 4, that is, b=4a.

Optionally, in the second monitoring region, a length c of the pixel in the first direction and a length d of the pixel in the second direction satisfy the following relationship: c=d.

Optionally, an area of a pixel in the first monitoring region is equal to an area of a pixel in the second monitoring region. That is, a×b=c×d.

In another possible implementation, the plurality of monitoring regions include a third monitoring region, and the third monitoring region is covered by a shielding member.

In an implementation of this application, in addition to the first monitoring region and the second monitoring region, the plurality of monitoring regions further include a third monitoring region. The third monitoring region is covered by a shielding member, so as to prevent a light beam from being received by the third monitoring region, thereby reducing introduction of interference light beams, and avoiding introduction of background noise to the first monitoring region and the second monitoring region.

Optionally, the third monitoring region is shielded via silkscreen printing, coating, electroplating, glue dispensing, or the like, to prevent a light beam from being received by the third monitoring region.

Optionally, the third monitoring region does not overlap the first monitoring region or the second monitoring region.

In another possible implementation, the optical element is configured to impart astigmatism to the first light beam in the second direction, and the optical element is configured to impart field curvature to the first light beam.

In an implementation of this application, the optical element is configured to impart astigmatism and field curvature to the first light beam. A divergence direction (the second direction) of the light beam caused by the astigmatism is perpendicular to an extension direction (the first direction) of the first light beam, so as to generate large-scale divergence of the light beam near the optical axis of the optical element in the second direction. A divergence intensity applied to the light beam by field curvature is proportional to the distance between a light beam and the optical axis. In addition, the divergence effect of field curvature on the light beam is omnidirectional (the first direction and the second direction). With reference to the foregoing description, the first light beam is subjected to the effects of astigmatism and field curvature, and presents the following rule: 1. A light beam near the optical axis of the optical element is mainly subjected to the effect of astigmatism, and generates large-scale divergence in the second direction. 2. As the distance between a light beam and the optical axis of the optical element increases, the effects of field curvature and astigmatism on the light beam are continuously enhanced. Therefore, the light beam undergoes a corresponding degree of divergence in both the first direction and the second direction.

Optionally, by controlling properties of astigmatism and field curvature, the degree of divergence of the light beam near the optical axis of the optical element in the second direction is enabled to be greater than the degree of divergence other light beams (in this case, the detector may be located between the meridional focal plane and the sagittal focal plane).

Optionally, the receiving module according to the implementations of this application is based on a one-dimensional line-shaped-light-spot scanning architecture, and realizes high-resolution reception of the receiving module by virtue of properties including astigmatism and field curvature of the optical element. It can be learned that the receiving module requires no expensive optical component or complex control logic, and is capable of effectively controlling the production cost and volume of the receiving module.

In another possible implementation, the optical element is configured to impart field curvature to the first light beam. A cylindrical microlens array is provided in the first monitoring region, and the cylindrical microlens array is configured to diverge, in the second direction, the light beam passing through the optical element.

In an implementation of this application, the optical element is configured to impart field curvature to the first light beam, such that the divergence intensity of the light beam increases continuously with the increase of the distance between the light beam and a principal optical axis of the optical element, so as to ensure the dynamic range of the imaging corresponding to other monitoring regions (the monitoring regions other than the first monitoring region). In addition, the optical element imparts field curvature to the first light beam, so as to further ensure that the light beam received by the first monitoring region undergoes less divergence in the first direction, thereby ensuring that the imaging corresponding to the first monitoring region has a high resolution. In an implementation of this application, a cylindrical microlens array is provided in the first monitoring region, and is configured to diverge the light beam passing through the optical element in the second direction. Specifically, the cylindrical microlens array causes the light beam received by the first monitoring region to be diverged in the second direction, so as to ensure the dynamic range of the imaging corresponding to the first monitoring region.

Optionally, by controlling the properties of the cylindrical microlens array and the field curvature, the degree of divergence in the second direction of the light beam received by the first monitoring region is enabled to be greater than the degree of divergence of the light beams received by the other monitoring regions.

Optionally, the receiving module according to the implementations of this application is based on a one-dimensional line-shaped-light-spot scanning architecture, and achieves high-resolution reception of the receiving module by virtue of the field curvature of the optical element and the cylindrical microlens array. It can be learned that the receiving module requires no expensive optical component or complex control logic, and is capable of effectively controlling the production cost and volume of the receiving module.

In another possible implementation, the optical element is configured to impart field curvature to the first light beam. The receiving module further includes a cylindrical lens, which is provided between the optical element and the detector. The cylindrical lens is configured to diverge, in the second direction, the light beam passing through the optical element.

In an implementation of this application, the optical element is configured to impart field curvature to the first light beam, such that the divergence intensity of the light beam increases continuously with the increase of the distance between the light beam and the optical axis of the optical element, so as to ensure the dynamic range of the imaging corresponding to the other monitoring regions (the monitoring regions other than the first monitoring region). In addition, the optical element imparts field curvature to the first light beam, so as to further ensure that the light beam received by the first monitoring region undergoes less divergence in the first direction, thereby ensuring that the imaging corresponding to the first monitoring region has a high resolution. In an implementation of this application, the cylindrical lens is provided between the optical element and the detector, to enable divergence of the foregoing light beam passing through the optical element in the second direction, such that the light beam received by the first monitoring region is diverged in the second direction, thereby ensuring the dynamic range of the imaging corresponding to the first monitoring region.

Optionally, a cylindrical lens is provided between the optical element and the detector, to further enable light beams other than those received by the second monitoring region to diverge in the second direction, thereby enhancing the dynamic range of the imaging corresponding to the second monitoring region.

Optionally, the receiving module according to the implementations of this application is based on a one-dimensional line-shaped-light-spot scanning architecture, and achieves high-resolution reception of the receiving module by virtue of field curvature of the optical element and the cylindrical lens array. It can be learned that the receiving module requires no expensive optical component or complex control logic, and is capable of effectively controlling the production cost and volume of the receiving module.

In another possible implementation, the first direction depends on the target focal plane.

In an implementation of this application, the first direction depends on the target focal plane, so that the extension direction of the first light beam can be adjusted based on the target focal plane, thereby facilitating flexible design of the emitting module.

Optionally, the target focal plane is a meridional focal plane or a sagittal focal plane.

Optionally, when the optical element exhibits no astigmatism, the target focal plane is an optimal focal plane.

Optionally, when the target focal plane is a meridional focal plane, the first direction is a vertical direction (a direction perpendicular to the horizon), and the second direction is a horizontal direction (a direction parallel to the horizon).

Optionally, when the target focal plane is a sagittal focal plane, the first direction is a horizontal direction, and the second direction is a vertical direction.

Optionally, when the target focal plane is an optimal focal plane, the first direction may be any direction, for example, a horizontal direction or a vertical direction. The second direction is ensured to be perpendicular to the first direction. For example, the first direction is a vertical direction, and the second direction is a horizontal direction. The first direction is a horizontal direction, and the second direction is a vertical direction.

In another possible implementation, a quantity of detection cells in a pixel depends on an area of the detection cell, and the detection cell is a smallest unit for the detector to receive a light beam.

In an implementation of this application, a quantity of detection cells in a pixel depends on an area of the detection cell. For example, the quantity of detection cells in the pixel is in direct proportion to the area of the detection cell. For another example, pixels having the same area include an equal quantity of detection cells.

In another possible implementation, the detection cell includes one or more of the following: a single-photon avalanche detector SPAD, a silicon photomultiplier SiPM, a multi-pixel photon counter MPPC, a semiconductor avalanche photodiode APD, or a "positive-intrinsic-negative" PIN-type diode.

In another possible implementation, the cylindrical lens may be integrally assembled and aligned with the optical element.

In another possible implementation, the cylindrical microlens array may be embossed on a cover glass (cover glass, CG).

In another possible implementation, the cylindrical microlens array may be integrated and packaged by using a micro-nano fabrication process.

According to a second aspect, this application provides a detection apparatus. The detection apparatus includes an emitting module and a receiving module. The emitting module is configured to emit a line-shaped light beam, and the receiving module is configured to receive a line-shaped light beam emitted by an object. The receiving module includes the receiving module according to the first aspect and any one of the possible implementations.

In an implementation of this application, the emitting module is configured to emit a line-shaped light beam and perform one-dimensional scanning on the detected object, without requiring complex control logic. According to the first aspect and any one of the possible implementations, high-resolution reception of the detection apparatus is achieved, and a low-cost design of the detection apparatus is realized. Furthermore, since the receiving module according to this application is based on a one-dimensional line-shaped-light-spot scanning structure and requires no complex optical element, it is further conducive to realizing a miniaturized design of the detection apparatus.

In a possible implementation, the receiving module includes an optical element and a detector. When the detector is located on the meridional focal plane of the optical element, the line-shaped light beam emitted by the emitting module extends along the vertical direction. When the detector is located on the sagittal focal plane of the optical element, the line-shaped light beam emitted by the emitting module extends along the horizontal direction. When the optical element has no astigmatism, the line-shaped light beam emitted by the emitting module may extend along any direction. For example, the line-shaped light beam emitted by the emitting module extends along the horizontal direction or the vertical direction.

According to a third aspect, an embodiment of this application provides a radar or a radar system. The radar or the radar system includes the receiving module according to the first aspect or any possible implementation of the first aspect, or includes the detection apparatus according to the second aspect.

According to a fourth aspect, an embodiment of this application provides a terminal device. The terminal device includes the receiving module according to the first aspect or any possible implementation of the first aspect, or includes the detection apparatus according to the second aspect, or includes the radar or the radar system according to the third aspect.

According to a fifth aspect, an embodiment of this application provides a vehicle end. The vehicle end includes the receiving module according to the first aspect or any possible implementation of the first aspect, or includes the detection apparatus according to the second aspect, or includes the radar or the radar system according to the third aspect, or includes the terminal device according to the fourth aspect.

### BRIEF DESCRIPTION OF DRAWINGS

The following is a brief description of the accompanying drawings required for the description of the embodiments.
FIG. 1 is a diagram of an application scenario of a detection apparatus according to an embodiment of this application;
FIG. 2 is a diagram of a structure of a detection apparatus according to an embodiment of this application;
FIG. 3A and FIG. 3B are diagrams of a line scanning and line receiving scanning mode according to an embodiment of this application;
FIG. 4 is a diagram of a coaxial architecture according to an embodiment of this application;
FIG. 5 is a diagram of an off-axis architecture according to an embodiment of this application;
FIG. 6A is a diagram of a meridional plane and a sagittal plane according to an embodiment of this application;
FIG. 6B is a diagram of astigmatism according to an embodiment of this application;
FIG. 6C is a diagram of an imaging rule of astigmatism according to an embodiment of this application;
FIG. 6D is a diagram of field curvature according to an embodiment of this application;
FIG. 7 is a diagram of a receiving module according to an embodiment of this application;
FIG. 8 is a diagram of aberration interference according to an embodiment of this application;
FIG. 9 is a diagram of a detector configuration according to an embodiment of this application;
FIG. 10 is a diagram of another detector configuration according to an embodiment of this application;
FIG. 11A is a top view diagram of a receiving module according to an embodiment of this application;
FIG. 11B is a diagram of a target light spot according to an embodiment of this application;
FIG. 11C is a diagram of another target light spot according to an embodiment of this application;
FIG. 12 is a side view diagram of a package of a cylindrical microlens array and a detector according to an embodiment of this application;
FIG. 13 is a diagram of another detector configuration according to an embodiment of this application;
FIG. 14 is a diagram of another detector configuration according to an embodiment of this application;
FIG. 15 is a top view diagram of another receiving module according to an embodiment of this application;
FIG. 16 is a diagram of a detector configuration according to an embodiment of this application; and
FIG. 17 is a diagram of another detector configuration according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The following first explains and describes some terms in this application. It should be noted that these explanations are for ease of understanding by a person skilled in the art, and are not intended to limit the protection scope claimed in this application.

### (1) Pixel.

In this specification, a pixel (pixel) is a basic unit of an image (including a point cloud and a picture), and also indicates a sample. In the field of computer vision, information about a pixel is usually obtained through outputs of one or more optical-electrical conversion cells. Therefore, the pixel also indicates an optical-electrical conversion cell or an optical-electrical conversion cell group in an optical receiver. A common pixel in this field refers to one or more optical-electrical conversion cells (also referred to as a detection cell, or referred to as a cell for short, cell). Further, when a plurality of cells are included, the plurality of cells in the pixel may be arranged in an array. For example, in an array detector, one pixel includes A rows and B columns of detection cells, where A is an integer and A≥1, and B is a positive number and B≥1.

### (2) Pixel configuration.

The direction defined by one row of detection cells may be referred to as a horizontal direction of the detector, and the direction defined by one column of detection cells may be referred to as a vertical direction of the detector. In this application, a pixel is configured by combining A rows and B columns of detection cells into one pixel. For example, 3 rows and 12 columns of detection cells form one pixel, or 6 rows and 6 columns of detection cells form one pixel.

### (3) Pixel shape.

A pixel shape may be represented by a pixel length and a pixel width, where the pixel length represents a length of a pixel in the horizontal direction, and the pixel width represents a length of a pixel in the vertical direction. It should be noted that the following describes this application by way of example in which the detector has detection cells of the same type and the detection cells are evenly distributed in the detector. Therefore, the shape of a pixel depends on the pixel configuration, for example, a pixel formed by combining A rows and B columns of detection cells has a shape approximately of a rectangle with a length of B and a width of A. In some scenarios, the detector includes different types of detection cells, and the detection cells are not evenly distributed in the detector. With reference to the following description and common general knowledge in the art, the scenario still falls within the scope of protection of this application.

(4) A detection region (also referred to as a field of view) represents a maximum observable range. The detection region includes a detection region in the horizontal direction and a detection region in the vertical direction, and is usually represented by an angle. For example, the detection region may be represented in a format of A×B, where A represents a detection region in the horizontal direction, and B represents a detection region in the vertical direction. Specifically, a detection region is 120°×60°. The detection region may be further divided into a region of interest (region of interest, ROI) and a non-ROI region. The ROI region is generally located at a central position (also referred to as a central field of view) of the detection region, and the non-ROI region is located at an edge position (also referred to as an edge field of view) of the detection region.

(5) The ROI refers to a region that needs to be processed or that needs to be concerned and that is represented in a shape of a box, a circle, an ellipse, or an irregular polygon in the detection region. The region of interest generally includes a detection target.

(6) A light spot is a bright spot formed by light beams, and also refers to energy density (or referred to as strength or power) distribution of light beams. In embodiments of this application, the light spot may be considered as projection of light beams on a surface.

(7) A point cloud is an aggregation or a set of points. The point (also referred to as a target point or a data point) herein usually indicates a feature of a target. For example, the point indicates one or more pieces of information of a position (for example, a one-dimensional, two-dimensional, or three-dimensional coordinate position), a distance, an angle, reflection strength, a color, and the like.

The explanations of the foregoing terms may be used below.

A detection apparatus implements detection of a detection region, for example, ranging, speed measurement, or azimuth measurement by using a signal as a detection medium, emitting the signal to the detection region (namely, object space), and receiving an echo of the signal. The detection apparatus is provided with an emitting module and a receiving module. The emitting module is configured to emit a signal, and the receiving module is configured to receive the signal. The signal herein includes light, for example, laser. When light is used for detection, an optical system is provided in the detection apparatus to process the light beam. Processing herein includes one or more of beam splitting, light filtering, convergence, divergence, refraction, light filtering, reflection, scanning, or the like.

With development of intelligence, a device has an increasingly high requirement on detection precision of the detection apparatus. In some solutions, high-density scanning of an ROI is implemented by a two-dimensional non-uniform scanning mode, thereby increasing a point cloud density of the ROI, and further realizing high-resolution detection of the ROI. However, the two-dimensional non-uniform scanning mode has a complex structure, high cost, and poor reliability, and also results in a limited aperture of the scanning mirror, thereby affecting the ranging performance of the detection apparatus. In some other solutions, high-density dot matrix illumination of the ROI is formed in a DOE cascading manner, realizing high-resolution detection of the ROI. However, an existing DOE process is immature, resulting in a high DOE cost, poor temperature reliability, and diffraction efficiency that is far lower than a light transmittance of a refraction optical element, thereby affecting stability and ranging performance of the detection apparatus. It can be seen that the two-dimensional non-uniform scanning or DOE cascading is not conducive to the low-cost design of a high-resolution lidar.

Therefore, this application provides a receiving module, a radar, a terminal, and a vehicle end, relating to the technical field of lidar, thereby achieving high-resolution reception of a lidar, and realizing a low-cost design of a high-resolution lidar.

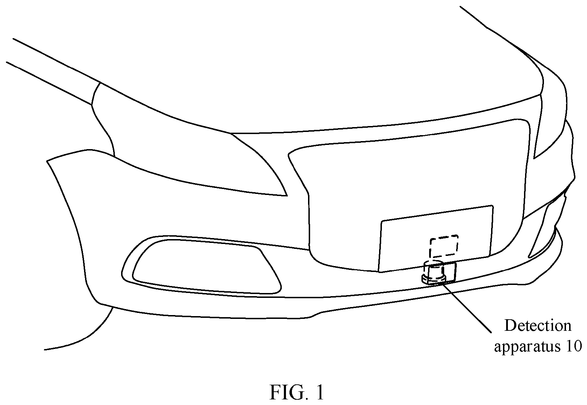

The following first describes an application scenario of a detection apparatus according to this application. FIG. 1 shows an example of a diagram of an application scenario of a detection apparatus. In this example, the detection apparatus 10 is mounted on a vehicle, and is therefore also referred to as a vehicle-mounted detection apparatus. In addition, the detection apparatus 10 further includes a shipborne detection apparatus mounted on a ship, an airborne detection apparatus mounted on a machine, and the like. In a possible example, as shown in FIG. 1, the detection apparatus 10 may emit a detection signal. The detection signal is reflected after irradiating an object in front of the vehicle, and the reflected echo signal may be received by the detection apparatus 10. The detection apparatus 10 then detects and obtains, based on the echo signal, information about an obstacle in front of the vehicle, for example, a size, a speed, and a distance of the obstacle, so as to implement a driving function of the vehicle by using the obstacle information, including but not limited to automatic driving or assisted driving.

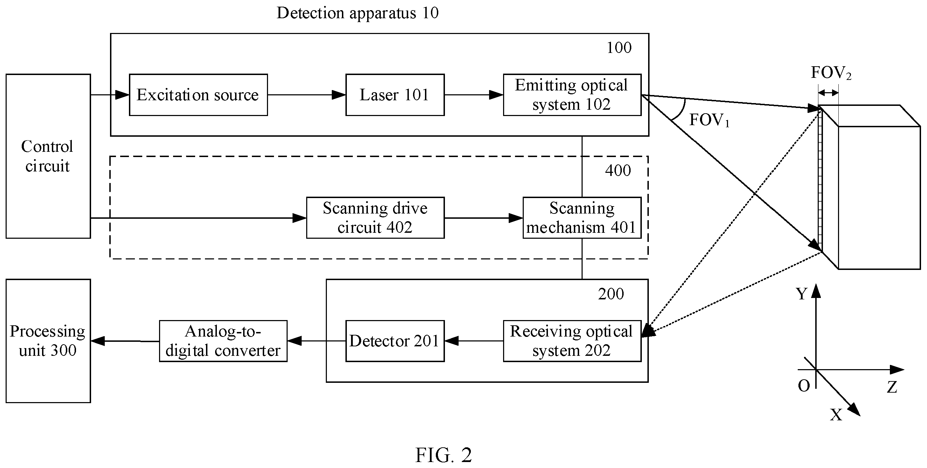

The detection apparatus 10 is described in detail with reference to FIG. 2. As shown in FIG. 2, the detection apparatus 10 includes an emitting module 100, a receiving module 200, and a processing unit 300. The emitting module 100 includes an excitation source (or referred to as a laser driver), a laser 101, and an emitting optical system 102. The excitation source drives the laser 101 to emit a detection signal, for example, a laser beam (or a laser pulse), and the laser beam (or the laser pulse) is emitted outward through the emitting optical system 102. The receiving module 200 includes a receiving optical system 202 and a detector 201. The detection signal emitted from the detection apparatus 10 is incident on a target object, and interacts with the target object to generate a reflected/scattered echo signal. The echo signal is collected by the receiving optical system 202 and then received by the detector 201, which converts the optical signal into an electrical signal and transmits the electrical signal to the processing unit 300 after the signal is processed by an analog front end. The processing unit 300 processes the received signal to obtain information such as a distance, a speed, and an azimuth angle of a target object. In addition, information such as surface morphology and physical properties of the target may be obtained to establish an object model. The detector 201 is typically an optoelectronic detector that converts a received optical signal into an electrical signal. The electrical signal is generally an analog signal. The processing unit 300 is typically configured to process a digital signal, and is, for example, a digital signal processor (digital signal processor, DSP). Therefore, the analog electrical signal is converted into a digital signal by using an analog-to-digital converter (ADC) and provided to the processing unit 300. In addition, the electrical signal may also be amplified, and the amplified electrical signal is converted into a digital signal through the analog-to-digital converter and then provided to the processing unit 300. The processing unit 300 includes a signal processing circuit, configured to process a digital signal to obtain information such as a distance from, a speed, and an azimuth angle of a target object, and to further establish an object model. The detection apparatus 10 further includes a control circuit, for example, a control part configured to control an excitation source and a control part configured to control a scanning drive circuit 402. The two control parts may be integrated together, or may be disposed independently. In addition, the signal processing circuit and the control circuit may alternatively be integrated together, or may be disposed independently.

In addition, in an implementation, the emitting module 100 may further include a laser modulator and a light beam controller. A laser beam emitted by the laser 101 passes through the light beam controller. The light beam controller controls a direction and a quantity of lines of the emitted laser beam under control of the laser modulator, and the laser beam emitted from the light beam controller is emitted outward through the emitting optical system 102.

In an implementation, the laser 101 may include one or more of the following light sources: a vertical cavity surface emitting laser (vertical cavity surface emitting laser, VCSEL), a photonic crystal surface emitting laser (photonic crystal surface emitting semiconductor laser, PCSEL), an edge emitting laser (edge emitting laser, EEL), a laser diode (laser diode, LD), a distributed feedback laser diode (distributed feedback LD, DFB-LD), a grating-coupled sampling reflection laser diode (grating-coupled sampling reflection LD, GCSR-LD), a micro-opto-electro-mechanical system laser diode (micro-opto-electro-mechanical system LD, MOEMS-LD), or the like.

In an implementation, the detector 201 includes, but is not limited to, a single-photon avalanche diode (single-photon avalanche diode, SPAD), a silicon photomultiplier (Silicon photomultiplier, SiPM), a multi-pixel photon counter (multi-pixel photon counter, MPPC), a semiconductor avalanche photodiode (avalanche photo detector, APD), a positive-intrinsic-negative (positive-intrinsic-negative, PIN) type diode (or referred to as a P-type semiconductor-impurity-N-type semiconductor diode), or the like. When the detector includes a plurality of detection cells, the plurality of detection cells may be arranged in an array to form an array detector. For example, a receiving module includes an SPAD array detector. The detector 201 may also be an image sensor, and includes one or more of the following photosensitive elements: a complementary metal oxide semiconductor (complementary metal oxide semiconductor, CMOS), a charge-coupled device (charge-coupled device, CCD), a Live MOS, or the like. For example, the image sensor includes a CMOS image sensor (CMOS image sensor, CIS), and the CIS is configured to convert an optical image into an electronic signal. In some scenarios, the detector and the image sensor may be collectively referred to as a light receiving chip.

In an implementation, the emitting optical system 102 and the receiving optical system 202 are systems including an optical element. The optical element includes but is not limited to a lens, a light filter, a polarizer, a reflection mirror, a beam splitter, a prism, a window plate, a scattering sheet, and the like.

In addition, the detection apparatus 10 may further include a scanning unit 400. Under the action of the scanning unit 400, a detection signal emitted by the emitting module 100 implements scanning of the detection signal across a plane, so as to generate real-time planar image information. The scanning unit 400 mainly includes a scanning mechanism 401 and a scanning drive circuit 402. The scanning drive circuit 402 is configured to drive the scanning mechanism 401 to operate. Under the action of the scanning mechanism 401, the detection signal achieves a change from "line" to "plane", or a change from "point" to "line" and then to "plane".

Optionally, the scanning mechanism 401 may include one or more of a one-dimensional oscillating mirror, a one-dimensional rotating mirror (polygon), a micro-electro-mechanical system (micro-electro-mechanical system, MEMS) galvanometer mirror, a metal galvanometer mirror, or the like. In some solutions, the scanning mechanism 401 may include one or more reflective surfaces. The reflective surface may be mounted on a body of the scanning module in a patch form; alternatively, the reflective surface of the scanning mechanism 401 and the body of the scanning mechanism 401 may be integrated. Optionally, a scanning mode of the scanning mechanism 401 may be one-dimensional scanning.

In a possible implementation, the emitting module 100 and the receiving module 200 may scan an object by using a line scanning and line receiving scanning mode (also referred to as a one-dimensional line-beam scanning architecture). For example, the detection signal emitted by the laser 101 propagates through the emitting optical system 102, and then forms a line-shaped light spot on a YOX plane. The line-shaped light spot is directed by the scanning unit 400, and scans a line-shaped region corresponding to a vertical field of view FOV₁ on an object each time (that is, the horizontally-shaded region on the object as illustrated in FIG. 2). In addition, the control circuit may control the laser 101 to repeatedly emit multiple detection signals in a form of pulsed laser to detect the same line-shaped region on the object, and a quantity of the detection signals may be set to, for example, a value between 10 and 500. After scanning one line-shaped region by using multiple detection signals, the scanning unit 400 controls subsequent multiple detection signals emitted by the emitting optical system 102 to move along a positive direction of an X-axis as shown in the figure to a next line-shaped region (also referred to as a scanning direction of the detection signals) until the region corresponding to the entire horizontal field of view FOV₂ is completely scanned, and it is determined that the traversal of the detection region is completed. Correspondingly, the line-shaped light beam emitted by the emitting optical system 102 is still a line-shaped light beam after being reflected by an object. The line-shaped light beam is reflected back to the receiving optical system 202 by using the scanning unit 400, and propagates through the receiving optical system 202, and is focused onto the detection cell of the detector 201. The detector 201 converts the signal received by the detection cell into an electrical signal, and then transmits the electrical signal to the processing unit 300. The processing unit 300 then generates point cloud data corresponding to each line-shaped region, and generates one frame of image by combining the point cloud data of each line-shaped region. It should be noted that a Z axis is parallel to the optical axis of the detection apparatus 10.

It should be understood that the light beam that is directed by the scanning unit 400 shown in FIG. 2 is a line-shaped light beam parallel to the Y axis. This is only a possible design. The embodiments of this application do not specifically limit the presentation form of the light beam. For example, in other designs, a line-shaped light beam directed by the scanning unit 400 may also be parallel to the X-axis, and is used to scan a line-shaped region corresponding to one horizontal field of view FOV₂ on the object each time, and move in the positive direction or negative direction of the Y-axis shown in the figure until the entire region corresponding to the full vertical field of view FOV₁ is completely scanned. Alternatively, in further designs, the line-shaped light beam directed by the scanning unit 400 may also be an inclined line-shaped light beam that has an included angle with both the X-axis and the Y-axis, and may move along the positive direction or negative direction of the X-axis, the positive direction or negative direction of the Y-axis, or other directions on the XOY plane shown in the figure, until the entire region corresponding to the full vertical field of view FOV₁ and the full horizontal field of view FOV₂ is completely scanned. Alternatively, in some designs, some optical lenses may be further disposed at special positions of the emitting optical system 102, so that the pulsed laser light emitted by the laser 101 is converted into an offset light beam or other irregularly shaped light beams after passing through the optical lenses, so as to adapt to more detection scenarios.

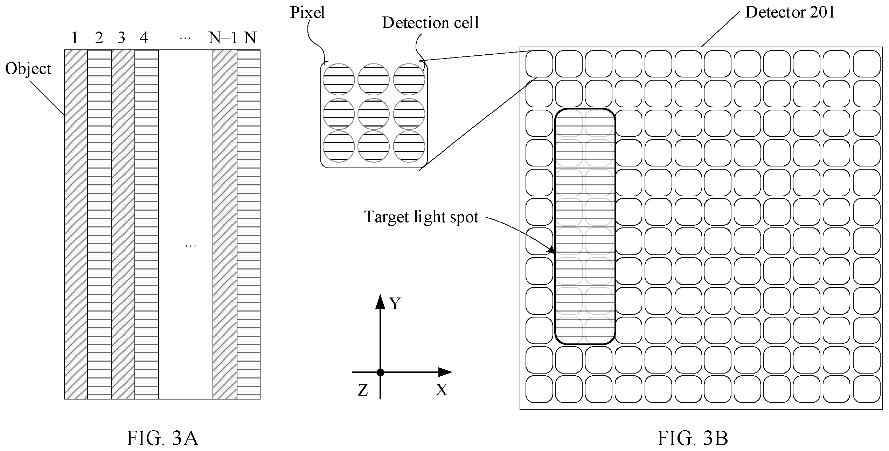

FIG. 3A and FIG. 3B are diagrams of a line scanning and line receiving scanning mode according to this application. The surface of an object may be divided into N regions (a shaded region with diagonal/horizontal lines on the object as illustrated FIG. 3A), where N is an integer greater than or equal to 1. The detection signals sequentially scan the N regions. For example, a scanning sequence of the detection signals is a region 1, a region 2, ..., a region N-1, and a region N (sequence numbers of the regions are indicated by numbers/or letters in the figure). Optionally, a quantity of times that the detection signals scan a region may be set. For example, the detection signals may be set to scan a region for 300 times, and then scan the next region. Correspondingly, for each scan of any region by the detection signals, the echo signals form a target light spot at the same location of the detector 201. For example, all the target light spots are located on positions shown in FIG. 3B. The detector 201 uses the detection cell as a smallest receiving unit for a target light spot, converts the target light spot into an electrical signal for subsequent processing, for example, transmitting the electrical signal to the processing unit 300. By way of example, a plurality of detection cells are arranged in an array manner to form one pixel. For example, the detection cells in the pixel shown in FIG. 3B are arranged in a 3×3 array. It should be noted that, more examples of the arrangement of the detection cells in the pixel are provided below with reference to specific implementations, and the 3×3 arrangement should not be used as a limitation of this application. The pixels covered by the target light spots in FIG. 3B may be alternatively arranged in an 8×2 array, that is, two pixels are included in the X direction, and eight pixels are included in the Y direction. In FIG. 3B, the target light spot covers two columns of pixels. In a specific implementation, the target light spot may cover one column of pixels, or may cover a plurality of columns of pixels. This is not limited in this application. It should be noted that the shape of the target light spot depends on the shape of the detection signal and one or more optical elements of the receiving optical system 202. Details are described below, and details are not described herein.

It should be understood that the detection signal shown in FIG. 3B extends along the Y-axis direction (the detection signal is parallel to the Y-axis). This is only a possible design. In a specific implementation process, the detection signal may alternatively extend along the X-axis direction, or an extension direction of the detection signal forms a specific included angle with the X-axis/Y-axis. This is not limited in this application.

It should be noted that the detection apparatus 10 may be a lidar. A type of the lidar is not specifically limited in this application, and may be one of a mechanical lidar, a liquid-state lidar, an all-solid-state lidar, or a hybrid solid-state lidar (also referred to as a semi-solid-state lidar).

When the detection apparatus 10 is a lidar, the detection signal may also be referred to as a laser beam (or a light beam for short). When the detection apparatus 10 scans an object by using the line scanning and line receiving scanning mode, the detection signal may also be referred to as a line-shaped light beam. According to the shape of the laser, the laser can be divided into point laser and line laser. The point laser requires the emitted light beam to be a collimated beam, so that a light spot formed at a long distance is a point, thereby defining the collimation direction of the emitted light beam. The line-shaped light beam requires the emitted light beam to be a collimated light beam in a first direction and a divergent light beam in a second direction, so that a light spot formed at a long distance is a line. Alternatively, the first direction may be referred to as a collimation direction, and the second direction may be referred to as a divergence direction, where the divergence direction is also equivalent to an extension direction of a line-shaped light beam, or a direction parallel to a line-shaped light beam. With reference to the coordinate system in FIG. 2 or FIG. 3A and FIG. 3B, the vertical direction mentioned hereinafter may be understood as the Y direction, and the parallel direction may be understood as the X direction.

**In a possible design,** the emitting module 100 and the receiving module 200 in the detection apparatus 10 may be of a coaxial design, or may be of an off-axis design. The coaxial design is an optical path architecture where principal optical axes of the emitting module 100 and the receiving module 200 are coincident, and the off-axis design refers to an optical path architecture where principal optical axes of the emitting module 100 and the receiving module 200 are non-coincident.

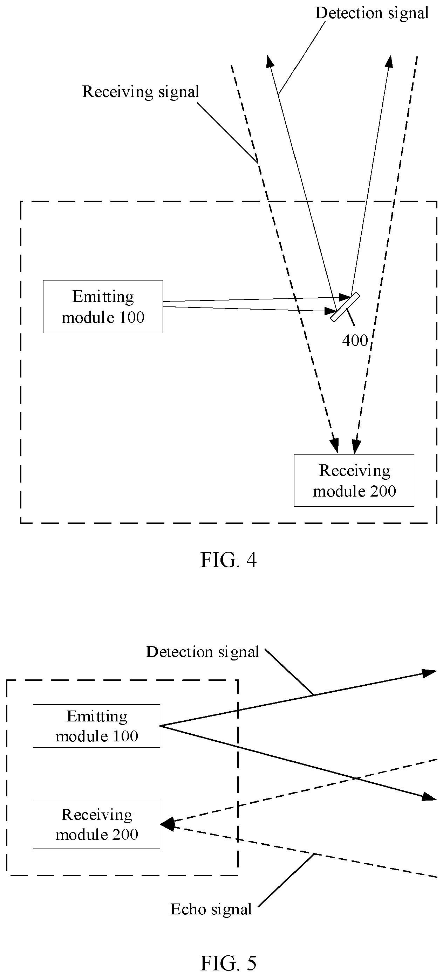

FIG. 4 is a diagram of an example of a coaxial architecture according to this application. The coaxial architecture shown in FIG. 4 realizes the coaxial alignment of a detection signal and an echo signal by using the scanning unit 400. The detection signal is reflected to object space by using the scanning unit 400, and the echo signal is received by the receiving module 200 without using the scanning unit 400 (for example, passing through two sides of the scanning unit 400). With reference to FIG. 2, the scanning unit 400 includes a scanning drive circuit 402 and a scanning mechanism 401. The scanning mechanism 401 may include one or more of a one-dimensional oscillating mirror, a one-dimensional rotating mirror (polygon), a micro-electro-mechanical system (micro-electro-mechanical system, MEMS) galvanometer mirror, a metal galvanometer mirror, or the like. In some solutions, the scanning mechanism 401 may include one or more reflective surfaces. The reflective surface may be mounted on a body of the scanning module in a patch form; alternatively, the reflective surface of the scanning mechanism 401 and the body of the scanning mechanism 401 may be integrated. Optionally, a scanning mode of the scanning mechanism 401 may be one-dimensional scanning.

FIG. 5 is a diagram of an example of an off-axis architecture according to this application. The principal optical axes of the emitting module 100 and the receiving module 200 shown in FIG. 5 are non-coincident, and the optical paths of the detection signal and the echo signal are also different. In the off-axis architecture, a better isolation effect between the emitting optical path and the receiving optical path is achieved, so as to improve the detection performance of the detection apparatus 10.

It may be understood that, regardless of an off-axis design or a coaxial design, the optical element has a significant impact on the final imaging quality. For example, in an ideal imaging system, the following three conditions are satisfied:
1. all rays from the same point on an object converge to the same point on an image;
2. if the plane (object plane) formed by all points on the object is perpendicular to the optical axis, the plane (image plane) formed by all points on the image is also perpendicular to the optical axis (the image field is flat); and
3. a ratio of an image height to an object height is constant for all points on the image plane and the object plane (there is one and only one magnification rate for a given object distance and image distance).

However, in an actual imaging system, an ideal imaging system generally cannot be obtained, or the cost of obtaining an ideal imaging system is extremely high, which is not conducive to commercialization and promotion of the product. Therefore, aberrations are usually present in an actual imaging system. In short, the difference between actual imaging and ideal imaging may be referred to as an aberration.

In one possible classification method, aberrations may be classified according to attributes such as color (or wavelength), location, and the like.

By way of example, according to the relationship between aberrations and color (wavelength), aberrations may be classified into monochromatic aberrations and chromatic aberrations.

By way of example, according to the relationship between aberrations and object point location, monochromatic aberrations may be classified into on-axis aberrations and off-axis aberrations. Herein, the "axis" refers to a principal optical axis of an optical system.

Further, off-axis aberrations may also be classified into astigmatism, field curvature, coma, distortion, and the like according to the cause of aberration generation.

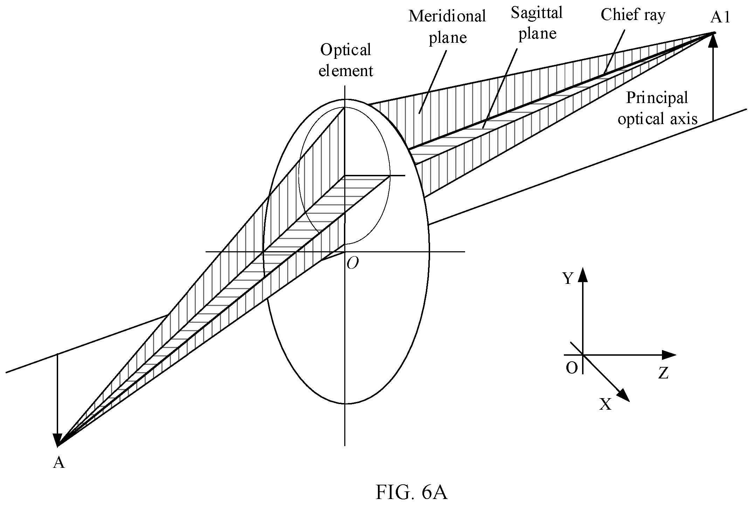

Astigmatism occurs when object point beams in the meridional focal plane and the sagittal focal plane are focused by the optical element with different focusing effects. This results in the case where all the light beams from the object point cannot be focused at the same point, leading to the phenomenon of unclear imaging. With reference to FIG. 6A, all rays emitted from an object point A are focused by the optical element on an image point A1. As shown in FIG. 6A, a cross-section passing through the object point A and the principal optical axis is referred to as a meridional plane, and a cross-section passing through a chief ray and perpendicular to the meridional plane is referred to as a sagittal plane. The light beam in the meridional plane is referred to as a meridional light beam, and an image formed by the meridional light beam is referred to as a meridional image point. The image plane on which the meridional image point is located is referred to as a meridional image plane, also referred to as a meridional focal plane. Similarly, the light beam in the sagittal plane is referred to as a sagittal light beam, and an image formed by the sagittal light beam is referred to as a sagittal image point. The image plane on which the sagittal image point is located is referred to as a sagittal image plane, also referred to as a sagittal focal plane.

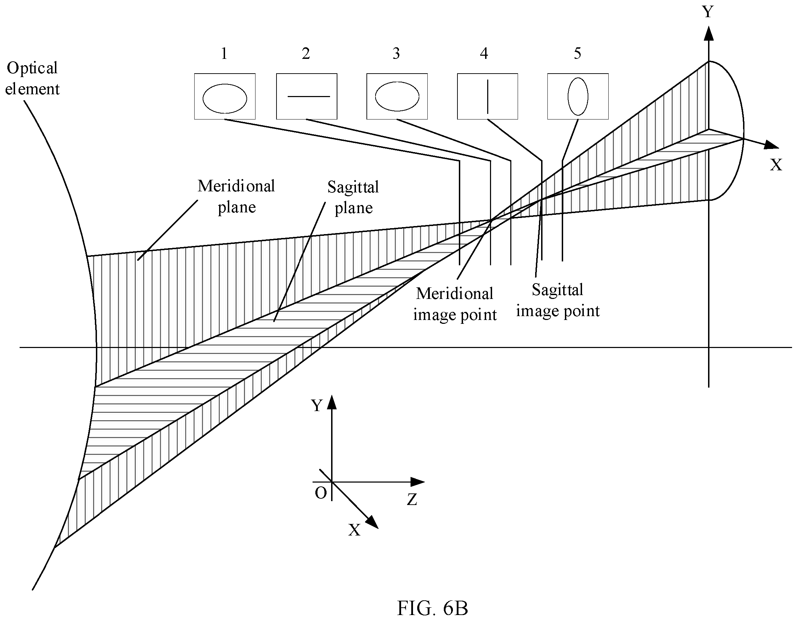

For ease of description, the following definitions may be made. As shown in FIG. 6B, the direction in the meridional plane perpendicular to the chief ray is referred to as the Y direction, the direction in the sagittal plane perpendicular to the chief ray is referred to as the X direction, and the direction parallel to the principal optical axis is referred to as the Z direction. The divergence effect of astigmatism/field curvature on the light beam may be divided into divergence in the Y/X direction.

FIG. 6B is a diagram of astigmatism according to an embodiment of this application. As shown in FIG. 6B, a meridional image point does not coincide with a sagittal image point (or the meridional focal plane does not coincide with the sagittal focal plane). For example, the meridional light beam is focused earlier than the sagittal light beam, and the meridional image point is also closer to the optical element.

In a possible implementation, when the optical element has astigmatism, a shape of a light spot corresponding to an object point changes with the movement of an image surface. Specifically, the following five cases are included:

For ease of description, it is first specified that the image plane is located before XX (a meridional image point/sagittal image point), and it is understood that spacing between the image plane and the optical element is less than the spacing between the image plane and XX. That the image plane is located after XX is understood as that a spacing between the image plane and the optical element is greater than the spacing between the image plane and XX.

Case 1: The image plane is located before the meridional image point. In this case, a degree of divergence of a light spot corresponding to an object point on the sagittal plane is greater than a degree of divergence on the meridional plane. Therefore, the light spot is elliptical. Specifically, a length of the elliptical light spot in the X direction is greater than a length of the elliptical spot in the Y direction.

Case 2: The image plane is a meridional focal plane. In this case, the meridional light beam is fully focused, while the sagittal light beam remains divergent. Therefore, a light spot corresponding to an object point diverges only in the sagittal plane and appears as a straight line (a line-shaped light spot), the length of which is related to the degree of astigmatism. Specifically, the line-shaped light spot extends in the X-axis direction.

Case 3: The image plane is located beyond the meridional image point and before the sagittal image point. In this case, both the meridional light beam and the sagittal light beam are divergent, and their respective degrees of divergence change as the image plane moves. Therefore, the light spot corresponding to the object point presents different shapes. For example, as the image plane moves from the meridional image point to the sagittal image point, the light spot corresponding to the object point sequentially takes the form of: an ellipse (a length in the X-axis direction is greater than a length in the Y-axis direction), a circle, and an ellipse (a length in the Y-axis direction is greater than a length in the X-axis direction).

Case 4: The image plane is a sagittal focal plane. In this case, the sagittal light beam is fully focused, while the meridional light beam remains divergent. Therefore, a light spot corresponding to an object point diverges only in the meridional plane and appears as a straight line (a line-shaped light spot), the length of which is related to the degree of astigmatism. Specifically, the line-shaped light spot extends in the Y-axis direction.

Case 5: The image plane is located beyond the sagittal image point. In this case, a degree of divergence of a light spot corresponding to an object point on the meridional plane is greater than a degree of divergence on the sagittal plane. Therefore, the light spot is elliptical. Specifically, the length of the elliptical light spot in the Y-axis direction is greater than the length of the elliptical spot in the X-axis direction.

In another possible implementation, a degree of divergence of a sub-beam due to astigmatism gradually increases as a distance between the sub-beam and the principal optical axis increases; alternatively, a degree of divergence of the sub-beam due to astigmatism is directly proportional to a square of an angle of view.

It may be understood that the line-shaped light beam reflected by an object includes sub-beams reflected by a plurality of object points, and ideally, the sub-beams are imaged as a single point on the detector. However, due to the existence of aberrations, the sub-beams appear as a light spot on the detector. A distance between the sub-beam and the principal optical axis may be equivalent to a distance between the object point/the image point/the light spot and the principal optical axis.

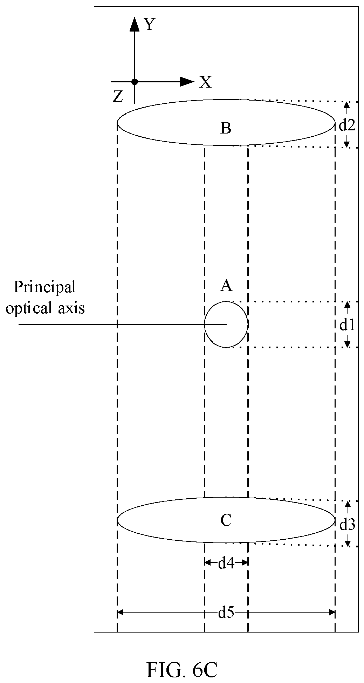

By way of example, taking Case 1 above as an example, the image plane is located before the meridional image point, and the light spot corresponding to the object point is elliptical. With reference to FIG. 6C, the light spot A is located near the principal optical axis, and a distance of the light spot B to the principal optical axis is equal to a distance of the light spot C to the principal optical axis. The light spot A, the light spot B, and the light spot C are all elliptical, and their lengths in the Y-axis direction are d1, d2, and d3, respectively, where d2=d3>d1. It may be understood that, the degree of divergence of a light spot in the Y-axis direction varies, that is, the degree of divergence in the Y direction increases as the distance between the light spot and the principal optical axis increases. In the X direction, a length of the light spot A is d4, and lengths of light spots B and C are both d5. Here, d5>d4. That is, the degree of divergence of the light spot in the X direction increases as the distance between the light spot and the principal optical axis increases, and different light spots having the same distance from the principal optical axis exhibit the same degree of divergence in the X direction.

It should be noted that, as shown in FIG. 6B above, the meridional light beam is focused prior to the sagittal light beam. In some implementations, there is also a case where the sagittal light beam is focused prior to the meridional light beam. Both cases are applicable to the solutions provided in this application. The following description takes the case shown in FIG. 6B as an example.

It may be understood that an optical element that exhibits astigmatism is also accompanied by field curvature. Conversely, an optical element that exhibits field curvature does not necessarily result in astigmatism.

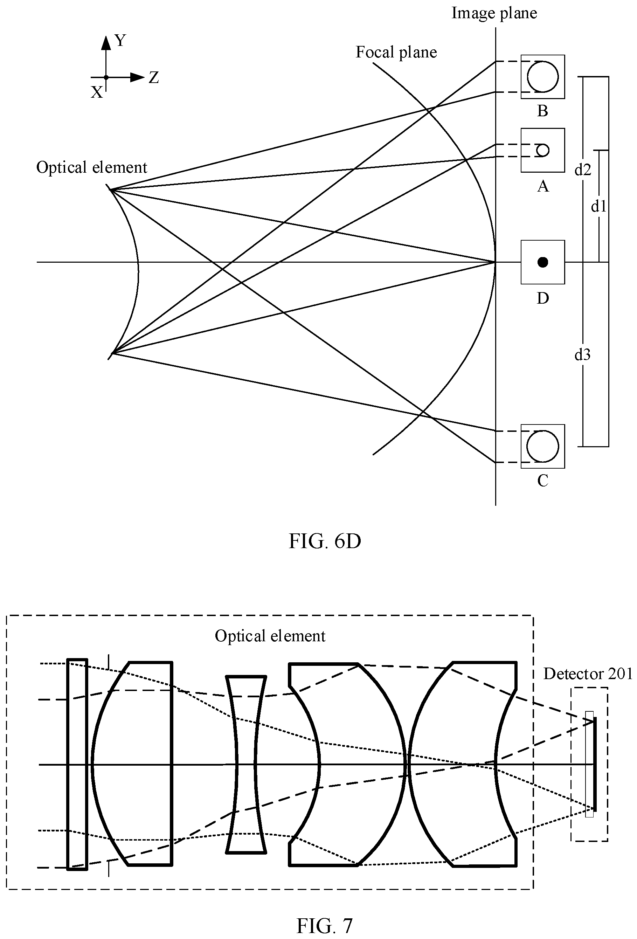

FIG. 6D is a diagram of field curvature according to an embodiment of this application. As shown in FIG. 6D, the focal plane of the optical element is a curved surface. As the distance between an object point and the principal optical axis increases, neither the meridional light beam nor the sagittal light beam can be focused on the image plane, and their degrees of divergence are equal. Therefore, the light spot corresponding to an object point near the principal optical axis can be focused to a point, whereas the light spot corresponding to an object point far from the principal optical axis is circular. Moreover, as the distance between the object point and the principal optical axis increases, an area of the light spot corresponding to an object point increases continuously. As shown in FIG. 6D, the distance d1 between the light spot A and the principal optical axis is less than the distance d2 between the light spot B and the principal optical axis, and therefore the area of the light spot A is less than the area of the light spot B. The distance d2 between the light spot B and the principal optical axis is equal to the distance d3 between the light spot C and the principal optical axis, and therefore the area of the light spot B is equal to the area of the light spot C. If the light spot D is located on the principal optical axis, the light spot D is a point light spot.

It should be noted that, in the diagram of field curvature shown in FIG. 6D, the focal plane curves towards the optical element. In one possible case, field curvature may also cause the focal plane to curve in the reverse direction to the optical element (to be understood with reference to FIG. 6D, not shown in the figure). In this case, for the divergence effect of field curvature on the light spot, refer to FIG. 6D. Details are not repeated herein.

FIG. 7 is a diagram of an example of a receiving module according to this application. As shown in FIG. 7, the lens module includes optical elements and a detector 201. The optical elements may include but are not limited to a convex lens and a concave lens. The convex lens may be a double-convex lens, a plano-convex lens, or a meniscus lens. The concave lens may be a double-concave lens, a plano-concave lens, or a meniscus lens. Specifically, arrangement of the optical elements shown in FIG. 7 is, from left to right, a cover glass, a plano-convex lens, a double-concave lens, and two meniscus lenses. A light beam passing through the optical elements is received by the detector 201, and thereby the detector 201 converts the light beam into an electrical signal and transmits the electrical signal to a processing unit for generating an image.

Optionally, when the optical elements cooperate with the detector 201 to receive a light beam and convert an optical signal into an electrical signal, the optical elements shown in FIG. 7 may be referred to as a receiving optical system, such as the receiving optical system 202 shown in FIG. 2.

Optionally, in the coaxial architecture shown in FIG. 4 above, the optical elements described in FIG. 7 may further be configured to cooperate with a laser and a laser excitation source to emit a detection signal. In this case, the optical elements shown in FIG. 7 may be referred to as an emitting optical system, such as the emitting optical system 102 shown in FIG. 2.

It may be understood that an optical element, whether used as an emitting optical system or a receiving optical system, exhibits aberrations. For example, the optical elements shown in FIG. 7 exhibits astigmatism and/or field curvature. To this end, this application provides three design solutions for the receiving module as an example. High-resolution detection of the detection apparatus is implemented by using astigmatism and/or field curvature of the optical element in cooperation with a specified pixel configuration, so that a low-cost and small-sized design of the detection apparatus can be implemented.

Before the design solution of the receiving module is described, the following description is first provided. The receiving module according to this application is capable of achieving high-resolution detection under a high dynamic range based on a one-dimensional line-beam scanning architecture (as shown in FIG. 2 above). Taking FIG. 2 as an example, the following description specifically describes the extension direction of the line-shaped light beam emitted by the detection apparatus 10 with reference to the design solution of the receiving module 200. Other implementations of the emitting module 100 and the scanning unit 400 in the detection apparatus 10 are not specifically limited.

In a possible implementation, the receiving module includes an optical element and a detector. The receiving module is, for example, the receiving module 200 shown in FIG. 2, and the optical element and the detector are the receiving optical system 202 and the detector 201, respectively.

The detector is located on the target focal plane of the optical element. It may be understood that where the optical element exhibits astigmatism, the meridional focal plane of the optical element does not coincide with the sagittal focal plane, and the target focal plane may be the meridional focal plane or the sagittal focal plane. Where the optical element exhibits no astigmatism, the meridional focal plane of the optical element coincides with the sagittal focal plane. In this case, the target focal plane refers to a single fixed focal plane, which is also referred to as an optimal focal plane.

The receiving module is configured to receive a first light beam, where the first light beam is a line-shaped light beam extending along a first direction. Taking FIG. 3B as an example, the first direction is, for example, the Y direction (also referred to as the vertical direction) shown in FIG. 3B. Optionally, the first direction may alternatively be the X direction (also referred to as the horizontal direction) shown in FIG. 3B. This is not limited in this application. In a possible implementation, reference may be made to the following description for the specific implementation of the extension direction of the light beam and the target focal plane (meridional focal plane/sagittal focal plane) on which the detector is located.

Optionally, the optical element is configured to impart astigmatism to the first light beam in the second direction. Taking Case 2 (Case 4) shown in FIG. 6B as an example, the image plane is a meridional focal plane (sagittal focal plane). The light spot corresponding to an object point diverges only in the sagittal plane (meridional plane) and appears as a straight line extending along the X direction (Y direction). This phenomenon of divergence in the sagittal plane or meridional plane is referred to as astigmatism imparted to the light beam by the optical element in the X direction (Y direction).

The optical element is configured to impart field curvature to the first light beam. Taking FIG. 6D as an example, the field curvature causes light spots at different positions to exhibit different degrees of divergence. Reference may be made to the description of FIG. 6D above for details, which are not repeated herein.

The extension direction (the first direction) of the first light beam is perpendicular to the direction (the second direction) of astigmatism. Taking Case 2 in FIG. 6B as an example, astigmatism causes the light spot to diverge along the X direction, and thus the extension direction of the first light beam is the Y direction. Taking Case 4 in FIG. 6B as an example, astigmatism causes the light spot to diverge along the Y direction, and thus the extension direction of the first light beam is the X direction. In addition, the direction of astigmatism may alternatively be at a specified included angle with the X-axis/Y-axis, and the extension direction of the first light beam remains perpendicular to the direction of astigmatism.

The detector includes a plurality of monitoring regions. It should be noted that the division of the detector into a plurality of monitoring regions may be conceptual. In a specific implementation, the region on the detector for receiving a light beam may be divided into a plurality of regions (equivalent to the detector including a plurality of monitoring regions).

Pixel shapes of the plurality of monitoring regions are different. Different pixel configurations may be applied to different monitoring regions, so that different monitoring regions have different detection resolutions. For example, the region on the detector for receiving a light beam may be divided into a first monitoring region, a second monitoring region, and a third monitoring region. The pixel configuration in the first monitoring region and the second monitoring region is 6×6, and the pixel configuration in the second monitoring region is 3×12. For more specific descriptions, reference may be made to the subsequent relevant description, and details are not described herein. Optionally, that pixel shapes of a plurality of monitoring regions are different may be further understood to mean that at least two pixel configurations exist in the monitoring regions. For example, the detector includes five monitoring regions, and there are three pixel configurations in the five monitoring regions.

It may be understood that the detection apparatus according to this application is based on a one-dimensional line-shaped beam scanning architecture, and the scanning direction (the X direction) of the line-shaped light beam is perpendicular to the extension direction of the line-shaped beam. A quantity of pixels corresponding to a line-shaped light beam in the scanning direction is related to a width of the line-shaped light beam, sampling resolution, and the like. Therefore, quantities of pixels generated in the scanning direction when the same line-shaped light beam is received in different monitoring regions are equal. For example, when the first monitoring region and the second monitoring region receive the first light beam, the quantity of pixels generated in the scanning direction is N columns, where N is a positive integer. For example, N=1, 2, ..., 100, or the like.

The following describes the optical element and the detector, respectively, and presents three design solutions for the receiving module. The three types of receiving modules are applicable to the detection apparatus 10 shown in FIG. 2 above.

**Design solution 1:** The receiving module includes an optical element and a detector. The optical element exhibits astigmatism and field curvature. The detector includes a plurality of monitoring regions, and pixels in different monitoring regions have different shapes but equal pixel areas.

In a possible implementation, the first direction depends on the target focal plane.

By way of example, when the target focal plane is a meridional focal plane, light beams in the meridional plane within the target focal plane can be focused, while light beams in the sagittal plane are in a divergent state. The first direction is parallel to the meridional plane and perpendicular to the sagittal plane. Taking Case 2 in FIG. 6B above as an example, astigmatism causes the light spot to be in a divergent state in the sagittal plane, and thus the first direction is the Y direction, and the corresponding second direction is the X direction.

By way of example, when the target focal plane is a sagittal focal plane, light beams in the sagittal plane within the target focal plane can be focused, while light beams in the meridional plane are in a divergent state. The first direction is parallel to the sagittal plane and perpendicular to the meridional plane. Taking Case 4 in FIG. 6B above as an example, astigmatism causes the light spot to be in a divergent state in the meridional plane, and thus the first direction is the X direction, and the corresponding second direction is the Y direction.

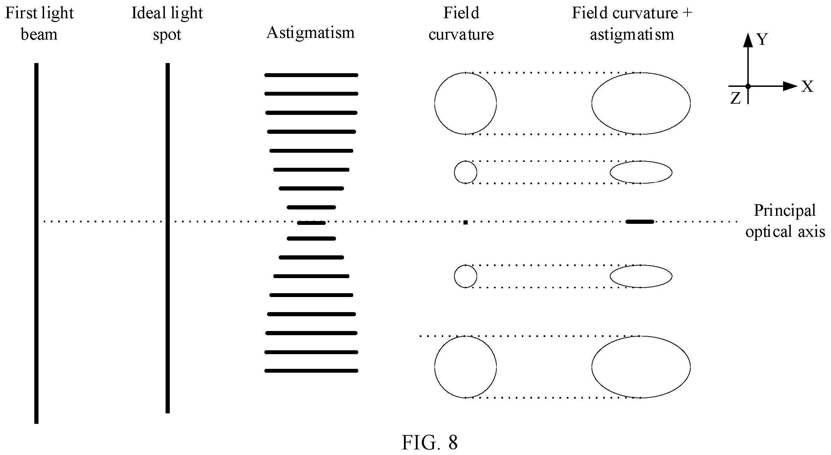

FIG. 6B and FIG. 6C above only illustrate the divergence effect of astigmatism on sub-beams. To more clearly illustrate the combined divergence effect of astigmatism and field curvature on the line-shaped light beam, refer to FIG. 8. In FIG. 8, an example in which the first direction is the Y direction, the second direction is the X direction, and the detector is located on the meridional focal plane or the sagittal focal plane of the optical element is provided for description. The first light beam may be, for example, a line-shaped light beam reflected by an object. The first light beam extends along the Y direction, and the light spot formed by the receiving module upon receiving the first light beam is also a light spot extending along the Y direction, namely, an "ideal light spot" shown in FIG. 8. As shown by the light spot corresponding to "astigmatism" in FIG. 8, under the effect of astigmatism, the light spot formed by the receiving module upon receiving the first light beam diverges in the X direction. As the distance between the light spot and the principal optical axis increases, the divergence effect of astigmatism in the X direction gradually enhances. As shown by the light spot corresponding to "field curvature" in FIG. 8, under the effect of field curvature, the light spot formed by the receiving module upon receiving the first light beam diverges in the X direction and the Y direction. As the distance between the light spot and the principal optical axis increases, the divergence effect of field curvature in the X direction and the Y direction gradually increases. As shown by the light spot corresponding to "field curvature + astigmatism" in FIG. 8, under the combined effect of astigmatism and field curvature, sub-beams near the principal optical axis are only subjected to the divergence effect of astigmatism in the X direction, making the light spot near the principal optical axis a line-shaped light spot extending along the X direction. With the increase of the distance between the sub-beams and the principal optical axis, the divergence effect of astigmatism in the X direction is enhanced, and the effects of field curvature in the X direction and the Y direction are enhanced, making the light spot elliptical. As the distance between the sub-beams and the principal optical axis continues to increase, the divergence effect of astigmatism in the X direction continues to weaken, and the effects of field curvature in the X direction and the Y direction continue to enhance, so that the light spot remains elliptical. It should be noted that the light spots shown in FIG. 8 may be sampling results of actual light spots, and are used to better present the divergence effect corresponding to astigmatism, field curvature, or astigmatism+field curvature. It may be understood that content shown in FIG. 8 is used to illustrate the divergence effect on the first light beam when the target focal plane is a meridional focal plane. When the target focal plane is a sagittal focal plane, reference may be made to the relevant description in FIG. 8 for the divergence effect on the first light beam.

It can be learned from the light spot corresponding to "field curvature + astigmatism" in FIG. 8 that the light spot near the principal optical axis has a small degree of divergence in the Y direction and the X direction. With the increase of the distance between the light spot and the principal optical axis, the degree of divergence of the light spot in the X direction and the Y direction increases. To this end, a plurality of monitoring regions may be provided on the detector for respectively receiving light spots at different positions. The monitoring region includes multiple pixels.

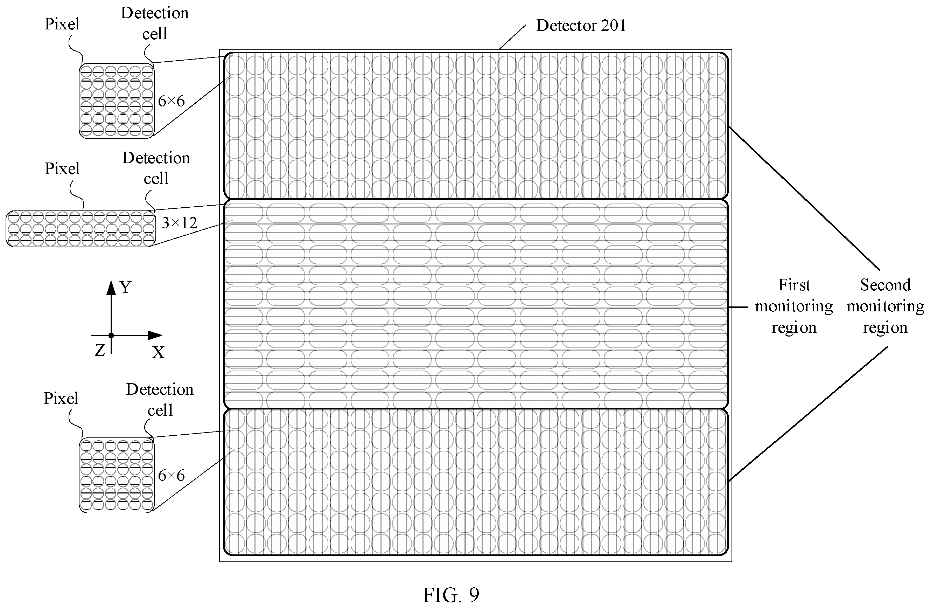

The detector includes a first monitoring region and a second monitoring region. As shown in FIG. 9, the region for receiving a light beam in the detector 201 includes a first monitoring region and a second monitoring region. The first monitoring region is used to receive light beams near the principal optical axis, and the second monitoring region is used to receive light beams at other positions. The first monitoring region is, for example, the region covered by horizontal stripes in FIG. 9, and the second monitoring region is, for example, the region covered by vertical stripes in FIG. 9. The light beams near the principal optical axis may refer to light beams whose degree of divergence in the first direction is less than a preset threshold, that is, light beams that can be well focused in the first direction. Details are described in detail below and are not repeated herein.

**The design of positions of the first monitoring region and the second monitoring region described above may be implemented as follows:**
In a possible design solution, the first monitoring region and the second monitoring region are connected to each other, but do not overlap each other. For example, the first monitoring region and the second monitoring region do not include a same detection cell, that is, one detection cell belongs exclusively to either the first monitoring region or the second monitoring region.

In another possible design solution, the arrangement direction of the first monitoring region and the second monitoring region is parallel to the extension direction of the first light beam, that is, the arrangement direction of the first monitoring region and the second monitoring region is parallel to the first direction. As shown in FIG. 9, when the extension direction of the first light beam is the Y direction, the arrangement direction of the first monitoring region and the second monitoring region is parallel to the Y direction. Correspondingly, when the extension direction of the first light beam is the X direction, the arrangement direction of the first monitoring region and the second monitoring region is parallel to the X direction.

In another possible design solution, the principal optical axis passes through the center of the first monitoring region. By way of example, when the detector 201 is fully coupled with the optical element, the focal point of the optical element is located at the central point of the first monitoring region. For example, when the target focal plane is a meridional focal plane, the focal point within the meridional focal plane is located at a central point of the first monitoring region. For another example, when the target focal plane is a sagittal focal plane, the focal point within the sagittal focal plane is located at the central point of the first monitoring region.

**The design of pixels in the first monitoring region and the second monitoring region described above may be implemented as follows:**
In a possible design solution, in the first direction, a length of a pixel in the first monitoring region is less than a length of a pixel in the second monitoring region. As shown in FIG. 9, in the Y direction (the first direction), a length of a pixel in the first monitoring region is 3, and a length of a pixel in the second monitoring region is 6. A smaller length of the pixel in the first direction indicates a larger quantity of pixels that can be generated in the first direction within the same length, and imaging resolution can be improved. Therefore, the imaging resolution corresponding to the first monitoring region of the detector 201 shown in FIG. 9 is higher than the imaging resolution corresponding to the second monitoring region. In addition, lengths of the pixels in the first monitoring region and the second monitoring region in the first direction are not limited in this application. For example, in the first direction, the length of the pixel in the first monitoring region may be 1, 2, 4, 5, 6, or 7, and the length of the pixel in the second monitoring region may be 3, 4, 5, 6, 7, or 8, provided that the length of the pixel in the first monitoring region is greater than the length of the pixel in the second monitoring region in the first direction.

In another possible design solution, in the second direction, the length of the pixel in the first monitoring region is greater than the length of the pixel in the second monitoring region. As shown in FIG. 9, in the X direction (the second direction), the length of the pixel in the first monitoring region is 12, and the length of the pixel in the second monitoring region is 6. The lengths of the pixels in the first monitoring region and the second monitoring region in the second direction are also not limited in this application. For example, in the second direction, the length of the pixel in the first monitoring region may be 6, 8, 10, 14, or 16, and the length of the pixel in the second monitoring region may also be 4, 8, 10, or 12, provided that the length of the pixel in the first monitoring region is less than the length of the pixel in the second monitoring region in the second direction. By configuring the length of the pixel in the first monitoring region to be greater than the length of the pixel in the second monitoring region in the second direction, a dynamic range of imaging in the first monitoring region is maintained without degradation.

In another possible design solution, an area of the pixel in the first monitoring region is equal to an area of the pixel in the second monitoring region. According to the design, the areas of the pixels in the first monitoring region and the second monitoring region are equal, so that pixels in different monitoring regions receive the same area (quantity) of light beams, thereby ensuring that dynamic imaging ranges corresponding to different monitoring regions are the same, and facilitating subsequent imaging processing (for example, operations such as splicing, fusion, and encoding). Still taking FIG. 9 as an example, the pixel configuration in the first monitoring region may be 6×6, and the pixel configuration in the second monitoring region may be 3×12. For another example, the pixel configuration in the first monitoring region may be 4×4, and the pixel configuration in the second monitoring region may be 2×8. For yet another example, the pixel configuration in the first monitoring region may be 8×8, and the pixel configuration in the second monitoring region may be 4×16.

In still another possible design solution, for the pixel in the second monitoring region, the length c in the first direction and the length d in the second direction satisfy the following relationship: d=M*c, where M is greater than or equal to 1 and less than 2. As shown in FIG. 9, c=d=6. Configuring the pixel in the second monitoring region to satisfy the relationship ensures that the second monitoring region can receive light beams affected by field curvature, thereby enabling accurate imaging. Optionally, when the optical element only includes field curvature, c=d may be designed.

It should be noted that FIG. 9 is merely an example of a design solution of the detector 201. The detector 201 may include more or fewer pixels, and each pixel may have a different configuration, with specific reference to the design solution set forth above. Therefore, FIG. 9 should not be used as a limitation to this application.

It may be learned from the detector 201 shown in FIG. 9 that the detector 201 includes a first monitoring region and a second monitoring region, and the first monitoring region and the second monitoring region occupy all of the detection cells in the detector 201. It can be learned with reference to FIG. 6B that, in an ideal imaging case, the light spot formed by the first light beam on the detector is a line-shaped light spot, and all detection cells on the detector do not need to be used. In addition, due to a design error in the optical element, background noise may also be introduced, which interferes with the imaging result.

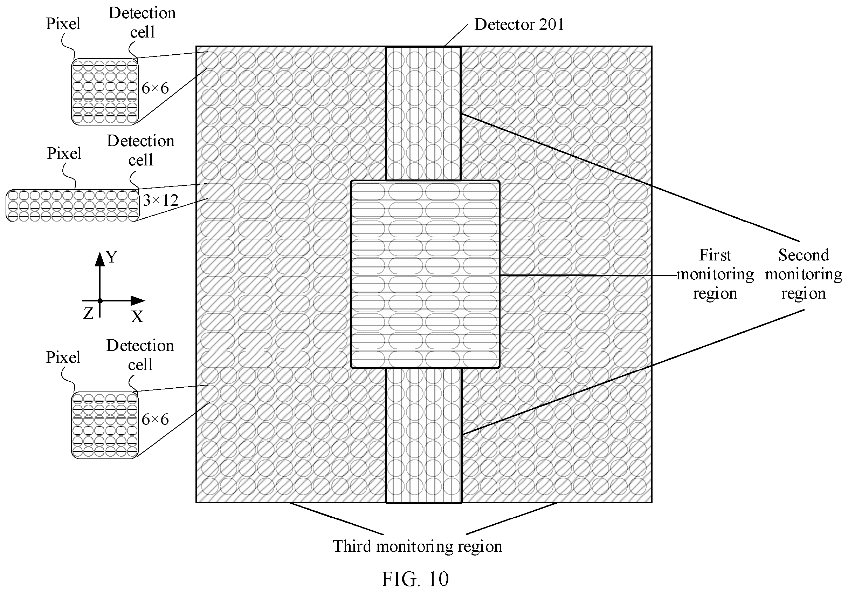

Therefore, an embodiment of this application further provides another design solution of the detector 201. As shown in FIG. 10, the detector 201 includes a first monitoring region, a second monitoring region, and a third monitoring region. The first and second monitoring regions are configured to receive light beams that have passed through the optical element. For specific descriptions, reference may be made to the first and second monitoring regions shown in FIG. 9. Details are not repeated herein.

The third monitoring region is covered by a shielding member (the region covered by diagonal lines in FIG. 10), which prevents the detection cells in the third monitoring region from receiving stray light beams, thereby avoiding interference with the imaging of the first monitoring region and the second monitoring region. By way of example, the detection cells in the third monitoring region may be shielded from stray light beams via silk-screen printing, coating, electroplating, dispensing, or the like. The configuration of elements in the third monitoring region is not limited in the implementations of this application. FIG. 10 is merely an example, and content shown in FIG. 10 should not be used as a limitation on this application. For example, the configuration of elements in the third monitoring region may be 6×6, 3×12, or the like. Since the elements in the third monitoring region do not receive light beams, the elements may also be left unconfigured.

Furthermore, this application does not limit the quantity of pixels in the second direction when the detector 201 receives one line-shaped light beam. The detector 201 shown in FIG. 10 receives one line-shaped light beam and generates 4 columns of pixels in the second direction. In a specific implementation, the detector 201 receives one line-shaped light beam, and may further generate 10, 20, 50, or 90 columns of pixels in the second direction. This is not limited in this application.

**Design solution 2:** The receiving module includes an optical element, a detector and a cylindrical microlens array. The optical element exhibits field curvature. The detector includes a plurality of monitoring regions, and pixels in different monitoring regions have different shapes but equal pixel areas.

It should be noted that, in the design solution 2, the aberration of the optical element does not include astigmatism, that is, the meridional focal plane and the sagittal focal plane of the optical element coincide. Therefore, the plane where the detector is located may be referred to as an optimal focal plane.

In a possible design solution, the cylindrical microlens array is provided on the detector, and is configured to diverge the light beam passing through the optical element in the second direction.

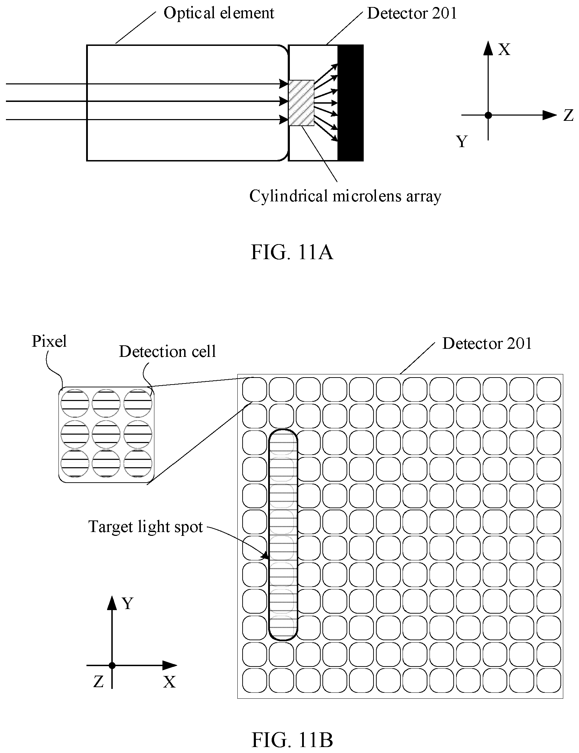

FIG. 11A is a top view diagram of a receiving module according to an embodiment of this application. The first light beam received by the optical element extends along the Y direction (the first direction), and the cylindrical microlens array is configured to diverge the first light beam in the X direction (the second direction). It may be understood that although the first light beam extends along the Y direction, the first light beam also has a specific width in the X direction, for example, 1 mm or 2 mm. This is not limited in this application. By way of example, the cylindrical microlens array may be controlled to diverge part of the light beams that have passed through the optical element, or the cylindrical microlens array may be controlled to diverge all of the light beams that have passed through the optical element.

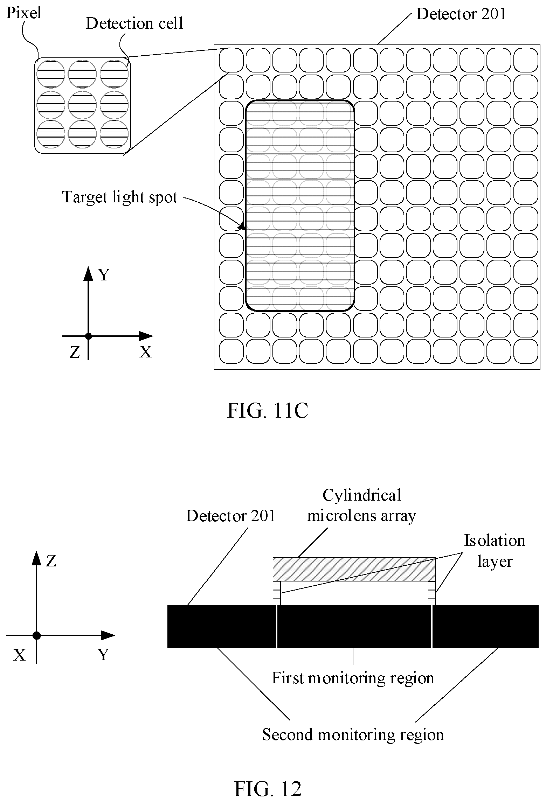

It should be noted that the divergence effect of the cylindrical microlens array or the cylindrical lens described below on the light beam may be to diverge the light beam in a direction (the second direction). For example, for a light beam ideally imaged as a point light spot, the cylindrical microlens array may diverge the light beam into a line-shaped light spot. For a light beam ideally imaged as a line-shaped light spot, the cylindrical microlens array may diverge the light beam into a surface light spot or a longer line-shaped light spot (depending on whether the divergence direction is the same as the extension direction of the line-shaped light spot). By way of example, refer to FIG. 11B and FIG. 11C. FIG. 11B shows a case where the light beam received by the detector 201 does not pass through the cylindrical microlens array or the cylindrical lens, and the target light spot covers one column of pixels (line-shaped light spots) in the X direction. FIG. 11C shows the case where the light beam received by the detector 201 passes through the cylindrical microlens array or the cylindrical lens, the target light spot diverges in the X direction, and the target light spot covers four columns of pixels (surface light spots) in the X direction.

Refer to FIG. 12, which is a side view diagram of a package of a cylindrical microlens array and a detector according to an embodiment of this application. FIG. 12 includes a cylindrical microlens array, isolation layers, and the detector 201.

With reference to FIG. 11A, it may be learned that the cylindrical microlens array is configured to diverge the first light beam in the X direction. The isolation layer is configured to isolate a divergent light generated by the cylindrical microlens array, preventing the divergent light generated by the cylindrical microlens from diverging in the Y direction and thus interfering with other monitoring regions. It may be understood that the isolation layer has a small volume, and normal operation of the detection cell in the detector is not affected. For example, the isolation layer may be provided in a gap between two detection cells so as not to affect the reception of light beams by the detection cells. A material of the isolation layer may be an oxide of silicon, a nitride of silicon, an oxide of metal, a nitride of metal, or the like, for example, one or more of materials such as silicon dioxide, silicon nitride, aluminum oxide, aluminum nitride, hafnium oxide, zirconia, zinc oxide, titanium dioxide, or the like. The detector 201 may include a first monitoring region and a second monitoring region. For a specific description, reference may be made to FIG. 9 or FIG. 10.

In a possible design solution, an isolation layer may be provided at the boundary between the first monitoring region and the second monitoring region, and is configured to prevent the light beam diverged by the cylindrical microlens array from being received by the second monitoring region, thereby affecting the imaging of the second monitoring region.

In a possible design solution, an isolation layer is configured to isolate the cylindrical microlens array from the detector at a specific spacing, so that the light beam diverged by the cylindrical microlens array is received by the detector.

In a possible design solution, the cylindrical microlens array is configured to diverge the light beam received by the first monitoring region in the second direction.

As shown in FIG. 12, the cylindrical microlens array is disposed above the first monitoring region and can diverge the light beam received by the first monitoring region in the X direction (the second direction). This causes the light spot received by the first monitoring region to expand in the X direction, thereby ensuring the dynamic range of imaging corresponding to the first monitoring region.

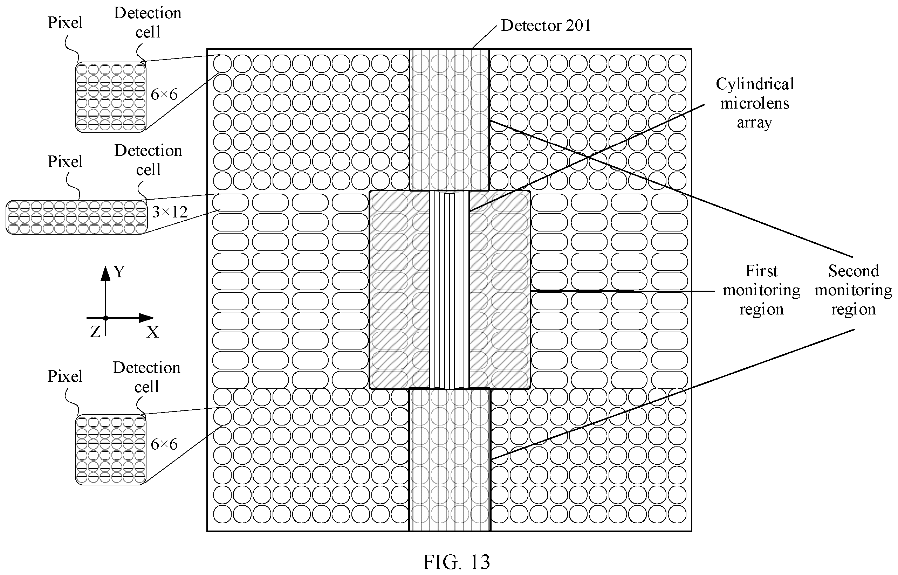

To further illustrate the position of the cylindrical microlens array on the detector 201, refer to FIG. 13. For the first monitoring region and the second monitoring region included in FIG. 13, reference can be made to the foregoing description of FIG. 9. Details are not repeated herein again. A cylindrical microlens array is further disposed above the first monitoring region, and the cylindrical microlens array is configured to diverge the light beam received by the first monitoring region in the X direction. Reference may be made to related descriptions of FIG. 11A and FIG. 12.

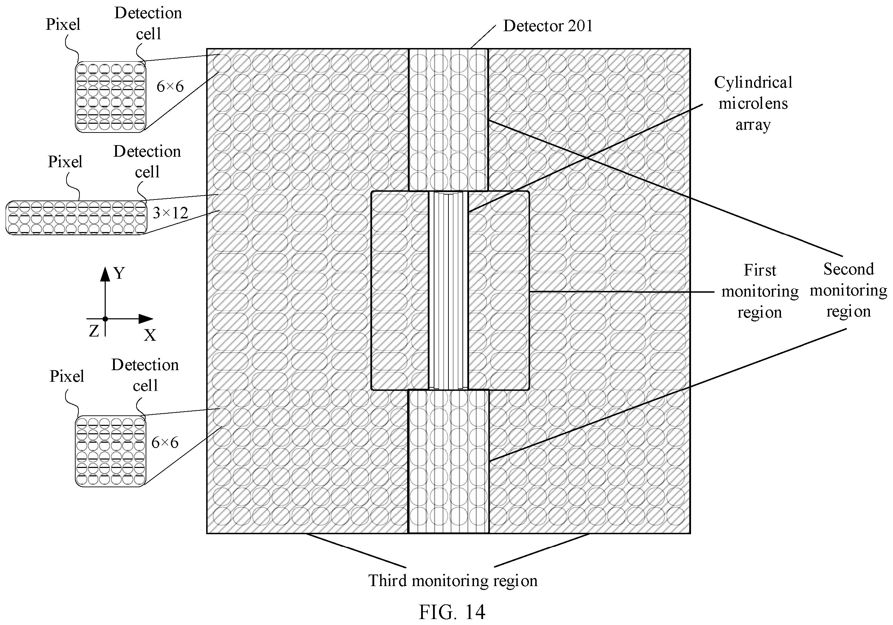

In another possible design, part of the monitoring regions of the detector 201 is covered by a shielding member, to reduce the influence of stray light beams on the imaging corresponding to the detector 201. With reference to FIG. 14, for the first monitoring region, the second monitoring region and the third monitoring region included in FIG. 14, reference can be made to the foregoing description of FIG. 10. Details are not repeated herein again. A cylindrical microlens array is further disposed above the first monitoring region, and the cylindrical microlens array is configured to diverge the light beam received by the first monitoring region in the X direction. Reference may be made to related descriptions of FIG. 11A, FIG. 11B, FIG. 11C and FIG. 12.

In a possible implementation, to ensure that the light beam received by the first monitoring region is the light beam passing through the cylindrical microlens array, a covering member (the region covered by diagonal lines in FIG. 13 or FIG. 14) needs to be disposed above the part of the first monitoring region where the cylindrical microlens array is not provided, so as to prevent the light beam that has not passed through the cylindrical microlens array from being received by the first monitoring region. For a description of the covering member, reference may be made to the foregoing description of FIG. 10. Details are not repeated herein again. It should be noted that the region of the first monitoring region shielded by the covering member is only used to prevent the light beam passing through the optical element from being directly received by the first monitoring region, and the region of the first monitoring region shielded by the covering member can still receive the light beam diverged by the cylindrical microlens array.

In another possible implementation, a length of the cylindrical microlens array is equal to a length of the first monitoring region in the first direction, and a length of the cylindrical microlens array is less than a length of the first monitoring region in the second direction. By way of example, in the first direction, the cylindrical microlens array overlaps with the first monitoring region; in the second direction, the center of the cylindrical microlens array coincides with the center of the first monitoring region; alternatively, in the second direction, the cylindrical microlens array is located at the center of the first monitoring region, so as to ensure that the light beam passing through the cylindrical microlens array can be uniformly diverged into the first monitoring region.

FIG. 11A shows a side view of a package of the cylindrical microlens array and the detector, and FIG. 12 shows a top view of a package of the cylindrical microlens array and the detector. In another possible design solution, the cylindrical microlens array may be imprinted on a cover glass (cover glass, CG) of the detector. In yet another possible design solution, the cylindrical microlens array may be integrated with the detector by using a micro-nano fabrication process.

**Design solution 3:** The receiving module includes an optical element, a detector, and a cylindrical lens. The optical element exhibits field curvature. The detector includes a plurality of monitoring regions, and pixels in different monitoring regions have different shapes but equal pixel areas.

It should be noted that, in the design solution 2, the aberration of the optical element does not include astigmatism, that is, the meridional focal plane and the sagittal focal plane of the optical element coincide. Therefore, the plane where the detector is located may be referred to as an optimal focal plane.

In a possible design solution, the cylindrical lens is provided between the optical element and the detector, and is configured to diverge the light beam passing through the optical element in the second direction.

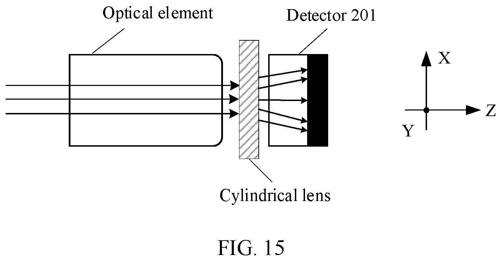

FIG. 15 is a top view diagram of another receiving module according to an embodiment of this application. The first light beam received by the optical element extends along the Y direction (the first direction), and the cylindrical lens is configured to diverge the first light beam in the X direction (the second direction). It may be understood that although the first light beam extends along the Y direction, the first light beam also has a specific width in the X direction, for example, 1 mm or 2 mm. This is not limited in this application. It should be noted that since the cylindrical lens has a large volume, all light beams that have passed through the optical element are usually diverged.

In a possible design, the cylindrical lens may be assembled and aligned together with the optical element, that is, the cylindrical lens is disposed within the receiving optical system 202.

In another possible design, the cylindrical lens may be assembled and aligned together with the detector, that is, the cylindrical lens is disposed within the detector 201.

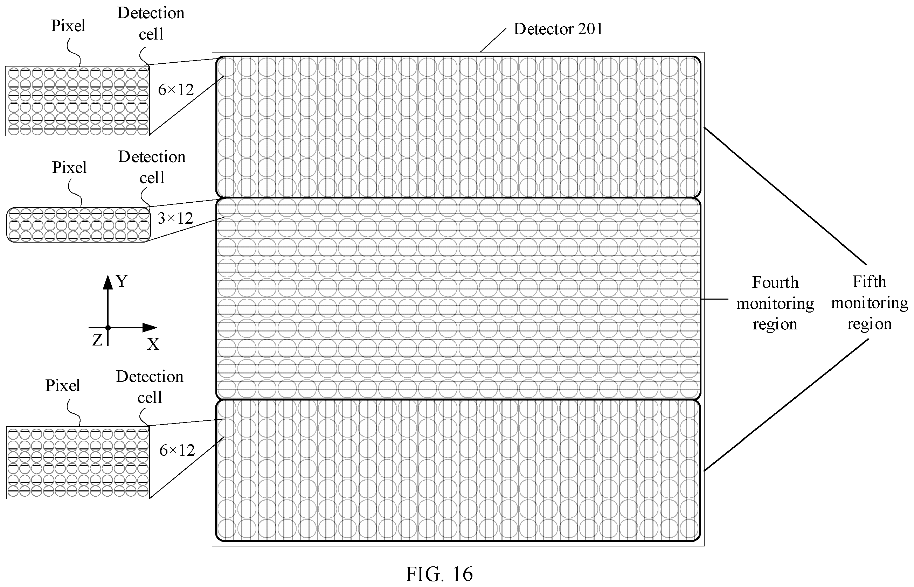

The detector includes a fourth monitoring region and a fifth monitoring region. As shown in FIG. 16, the region for receiving a light beam in the detector 201 includes a fourth monitoring region and a fifth monitoring region. The fourth monitoring region is used to receive light beams near the principal optical axis, and the fifth monitoring region is used to receive light beams at other positions. The fourth monitoring region is, for example, the region covered by horizontal stripes in FIG. 16, and the fifth monitoring region is, for example, the region covered by vertical stripes in FIG. 16.

For the design of the positions of the fourth monitoring region and the fifth monitoring region described above, reference may be made to the design of the positions of the first monitoring region and the second monitoring region. Details are not repeated herein again.

**The design of pixels in the fourth monitoring region and the fifth monitoring region described above may be implemented as follows:**
In a possible design solution, the detector 201 includes a plurality of monitoring regions, and the pixels in the plurality of monitoring regions have equal lengths in the second direction.

By way of example, the detector 201 shown in FIG. 16 includes a fourth monitoring region and a fifth monitoring region. The fourth monitoring region is used to receive light beams near the principal optical axis, and the fifth monitoring region is used to receive light beams at other positions. The pixels in the fourth monitoring region and the fifth monitoring region have the same length of 12 in the X direction. In addition, lengths of pixels in the fourth monitoring region and the fifth monitoring region in the second direction are not limited in this application. For example, in the second direction, the lengths of the pixels in the fourth monitoring region and the fifth monitoring region may also be 6, 8, 10 or 14, provided that the length of the pixel in the fourth monitoring region is less than or equal to the length of the pixel in the fifth monitoring region in the second direction.

Since the cylindrical lens diverges the light beams received by the detector 201 in the second direction, in conjunction with the pixel configuration of the detector 201 in the fourth monitoring region and the fifth monitoring region, it can be ensured that the imaging corresponding to the fourth monitoring region and the fifth monitoring region has a high dynamic range.

In addition, since the cylindrical lens has a diverging effect on the entire light beam passing through the optical element, and light beams far from the principal optical axis are also affected by field curvature, when configuring the pixels of the detector, the length of the fourth monitoring region in the second direction may be set to be less than or equal to the length of the fifth monitoring region in the second direction. By way of example, the length of the pixels in the fourth monitoring region in the second direction is 12, and the length of the pixels in the fifth monitoring region in the second direction is 14.

In a possible design solution, in the first direction, the length of the pixel in the fourth monitoring region is less than the length of the pixel in the fifth monitoring region.

As shown in FIG. 16, in the Y direction (the first direction), the length of the pixel in the fourth monitoring region is 3, and the length of the pixel in the fifth monitoring region is 6. A smaller length of the pixel in the first direction indicates a larger quantity of pixels that can be generated in the first direction within the same length, and imaging resolution can be improved. Therefore, the imaging resolution corresponding to the fourth monitoring region of the detector 201 shown in FIG. 16 is higher than the imaging resolution corresponding to the fifth monitoring region. In addition, lengths of pixels in the fourth monitoring region and the fifth monitoring region in the first direction are not limited in this application. For example, in the first direction, the length of the pixel in the fourth monitoring region may be 1, 2, 4, 5, 6, or 7, and the length of the pixel in the fifth monitoring region may be 3, 4, 5, 6, 7, or 8, provided that the length of the pixel in the fourth monitoring region is greater than the length of the pixel in the fifth monitoring region in the first direction.

It should be noted that FIG. 16 is merely an example of a design solution of the detector 201. The detector 201 may include more or fewer pixels, and each pixel may have a different configuration, with specific reference to the design solution set forth above. Therefore, FIG. 16 should not be used as a limitation to this application.

It may be learned from the detector 201 shown in FIG. 16 that the detector 201 includes a fourth monitoring region and a fifth monitoring region, and the fourth monitoring region and the fifth monitoring region occupy all of detection cells in the detector 201. It can be learned with reference to FIG. 6B that, in an ideal imaging case, the light spot formed by the first light beam on the detector is a line-shaped light spot, and all detection cells on the detector do not need to be used. In addition, due to a design error in the optical element, background noise may also be introduced, which interferes with the imaging result.

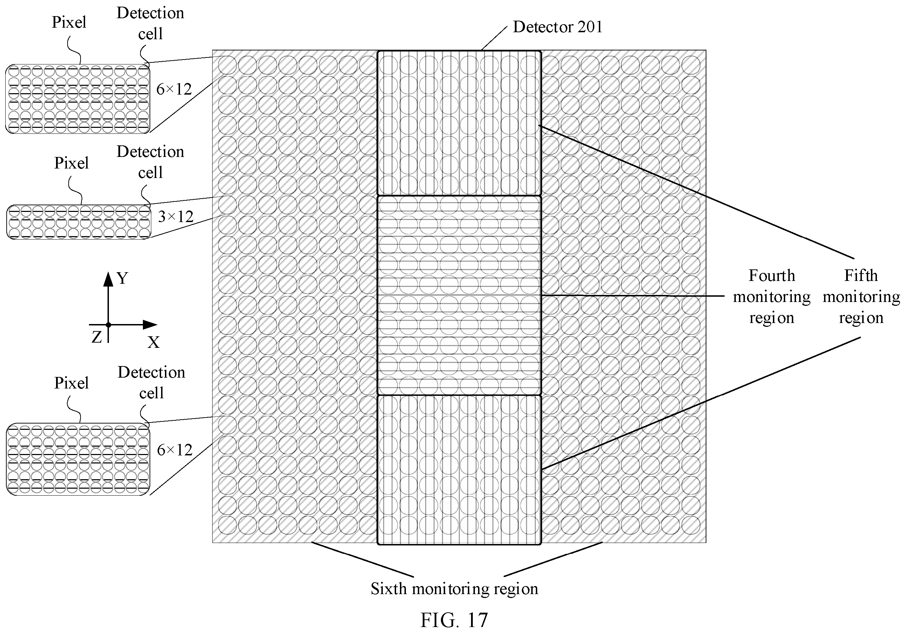

Therefore, an embodiment of this application further provides another design solution of the detector 201. As shown in FIG. 17, the detector 201 includes a fourth monitoring region, a fifth monitoring region, and a sixth monitoring region. The fourth monitoring region and the fifth monitoring region are configured to receive light beams passing through the optical element. For specific descriptions, reference may be made to the fourth monitoring region and the fifth monitoring region shown in FIG. 16. Details are not repeated herein.

The sixth monitoring region is covered by a shielding member, which prevents the detection cells in the sixth monitoring region from receiving stray light beams, thereby avoiding interference with the imaging of the fourth monitoring region and the fifth monitoring region. By way of example, the detection cells in the sixth monitoring region may be shielded from stray light beams via silk-screen printing, coating, electroplating, dispensing, or the like. The configuration of elements in the sixth monitoring region is not limited in the implementations of this application. FIG. 17 is merely an example, and content shown in FIG. 17 should not be used as a limitation on this application. For example, the configuration of elements in the sixth monitoring region may be 6×6, 3×12, or the like. Since the elements in the sixth monitoring region do not receive light beams, the elements may also be left unconfigured.

Furthermore, this application does not limit the quantity of pixels in the second direction when the detector 201 receives one line-shaped light beam. The detector 201 shown in FIG. 17 receives one line-shaped light beam and generates 8 columns of pixels in the second direction. In a specific implementation, the detector 201 receives one line-shaped light beam, and may further generate 1, 10, 20, 50, or 90 columns of pixels in the second direction. This is not limited in this application.

**The following describes, by using an example, the configurations of different monitoring regions in the first direction in the foregoing three design solutions.**

With reference to the foregoing description, it can be learned that, in the first direction, divergence of a light beam is only affected by field curvature. Therefore, the degree of divergence of the light beam is related to a magnitude of the field curvature. Further, the first monitoring region or the fourth monitoring region is configured to receive a light beam (a light beam whose degree of divergence in the first direction is less than a specified threshold) near the principal optical axis. Therefore, a quantity of pixels in the first monitoring region or the fourth monitoring region in the first direction depends on the field curvature of the optical element. With reference to FIG. 6D, when the field curvature of the optical element is large, a light beam at a distance d1 from the principal optical axis is strongly affected by the field curvature, that is, the light spot A cannot be properly focused, or the degree of focusing of the light spot A fails to meet the imaging requirements. In this case, a quantity of pixels in the first direction in the first monitoring region or the fourth monitoring region is small, so that the light beams received in the first monitoring region or the fourth monitoring region can be properly focused, thereby meeting an imaging requirement of a user. Certainly, when the field curvature of the optical element is small, a light beam at a distance d1 from the principal optical axis is weakly affected by the field curvature, that is, the light spot A can still be properly focused, or the degree of focusing of the light spot A can meet the imaging requirements. In this case, a quantity of pixels in the first direction in the first monitoring region or the fourth monitoring region is large, so that the light beams received in the first monitoring region or the fourth monitoring region can be properly focused, thereby meeting an imaging requirement of a user.

By way of example, the first monitoring region and the fourth monitoring region may be used as ROI regions.

In the **design solution 1** and the **design solution 2**, the first monitoring region in the detector 201 is configured to receive a light beam near the principal optical axis of the optical element. In the design solution 1, the light beam near the principal optical axis is mainly subject to the divergence effect of astigmatism in the second direction. In design solution 2, the light beam near the principal optical axis is mainly subject to the divergence effect of the cylindrical microlens array in the second direction. In the first direction, the light beam near the principal optical axis is less affected by aberrations, and therefore high-resolution imaging can be obtained. With reference to the pixel configuration in the first monitoring region, the dynamic range of imaging corresponding to the first monitoring region can be ensured not to decrease. In the **design solution 3**, the light beam passing through the optical element is diverged by the cylindrical lens in the second direction. A light beam near the principal optical axis is less affected by aberrations in the first direction. In conjunction with the pixel configuration in the fourth monitoring region, the imaging corresponding to the fourth monitoring region achieves high resolution while ensuring that the dynamic range is not decreased. In addition, the foregoing three design solutions have a simple structure, require no complex manufacturing process for the optical element, and have low manufacturing costs. In conclusion, the receiving module according to this application utilizes the one-dimensional line-shaped-light-spot scanning structure, thereby achieving high-resolution reception of a lidar and realizing a low-cost design of a high-resolution lidar. Furthermore, since the receiving module according to this application is based on a one-dimensional line-shaped-light-spot scanning structure and requires no complex optical element, the receiving module according to this application further helps implement a miniaturization design of a high-resolution lidar.

An embodiment of this application further provides a radar. The radar includes the foregoing detection apparatus 10, the foregoing receiving module 200, or the foregoing detector 201. In a possible implementation solution, the radar is, for example, a lidar. By way of example, the emitting module and the receiving module of the lidar may be in a coaxial design, as shown in FIG. 4, or may be in an off-axis design, as shown in FIG. 5. This is not limited in this application.

An embodiment of this application further provides a terminal device. The terminal device includes the foregoing detection apparatus 10, or includes the foregoing receiving module 200, or includes the foregoing detector 201, or includes the foregoing lidar.

Optionally, the terminal device may be an intelligent terminal or transportation means like a vehicle, an uncrewed aerial vehicle, or a robot, or the terminal device may be an industrial device. It should be understood that the terminal device involved in this application may include an intelligent terminal or transportation means like a vehicle, a robot, an uncrewed aerial vehicle, a ship, or a boat. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot such as an automated guided vehicle (automated guided vehicle, AGV), a walkable conversational robot, or a service robot. The industrial device is, for example, an industrial robot or a robotic arm. The entertainment device is, for example, a virtual reality (virtual reality, VR) device, a mixed reality (mixed reality, MR) device, or a 4D cinema cockpit.

Optionally, the detection apparatus may be installed in a plurality of possible positions. For example, the detection apparatus is installed on a platform of a dashboard of a vehicle, or installed on a head of the vehicle (as shown in FIG. 1), or on a top of a cockpit, a side surface of the vehicle, a tail of the vehicle, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the scope of protection of this application shall be subject to the protection scope of the claims.

## Claims

1. A receiving module, wherein the receiving module comprises an optical element and a detector, and the detector is located on a target focal plane of the optical element;
the receiving module is configured to receive a first light beam, wherein the first light beam is a line-shaped light beam extending along a first direction;
the optical element is configured to impart astigmatism to the first light beam in a second direction, and/or the optical element is configured to impart field curvature to the first light beam, wherein the first direction is perpendicular to the second direction; and
the detector is configured to receive a light beam passing through the optical element, the detector comprises a plurality of monitoring regions, and pixel shapes of the plurality of monitoring regions are different from one another.

2. The receiving module according to claim 1, wherein the plurality of monitoring regions comprise a first monitoring region and a second monitoring region; and
in the first direction, a length of a pixel in the first monitoring region is less than a length of a pixel in the second monitoring region.

3. The receiving module according to claim 1 or 2, wherein the plurality of monitoring regions comprise the first monitoring region and the second monitoring region; and
in the second direction, the length of the pixel in the first monitoring region is greater than the length of the pixel in the second monitoring region.

4. The receiving module according to any one of claims 1 to 3, wherein the plurality of monitoring regions comprise the first monitoring region and the second monitoring region; and
an area of the pixel in the first monitoring region is equal to an area of the pixel in the second monitoring region.

5. The receiving module according to claim 1 or 2, wherein the plurality of monitoring regions comprise the first monitoring region and the second monitoring region; and
in the second direction, the length of the pixel in the first monitoring region is equal to the length of the pixel in the second monitoring region.

6. The receiving module according to any one of claims 1 to 5, wherein the plurality of monitoring regions comprise the first monitoring region; and
a length a of the pixel in the first monitoring region in the first direction and a length b of the pixel in the second direction satisfy the following relationship: b=L*a, wherein L is greater than or equal to 2.

7. The receiving module according to any one of claims 1 to 6, wherein the plurality of monitoring regions comprise a third monitoring region, and the third monitoring region is covered by a shielding member.

8. The receiving module according to any one of claims 1 to 4, wherein the optical element is configured to impart astigmatism to the first light beam in the second direction, and the optical element is configured to impart field curvature to the first light beam.

9. The receiving module according to any one of claims 2 to 4, wherein the optical element is configured to impart field curvature to the first light beam; and
a cylindrical microlens array is provided on the first monitoring region, and the cylindrical microlens array is configured to diverge, in the second direction, the light beam passing through the optical element.

10. The receiving module according to claim 5, wherein the optical element is configured to impart field curvature to the first light beam, and the receiving module further comprises a cylindrical lens; and
the cylindrical lens is provided between the optical element and the detector, and the cylindrical lens is configured to diverge, in the second direction, the light beam passing through the optical element.

11. The receiving module according to any one of claims 1 to 10, wherein the first direction depends on the target focal plane.

12. The receiving module according to any one of claims 1 to 11, wherein a quantity of detection cells in the pixel depends on an area of the detection cell, and the detection cell is a smallest unit of the detector for receiving a light beam.

13. The receiving module according to claim 12, wherein the detection cell comprises one or more of the following: a single-photon avalanche detector SPAD, a silicon photomultiplier SiPM, a multi-pixel photon counter MPPC, a semiconductor avalanche photodiode APD, or a "positive-intrinsic-negative" PIN-type diode.

14. The receiving module according to any one of claims 1 to 8, wherein the target focal plane is a meridional focal plane or a sagittal focal plane.

15. The receiving module according to claim 14, wherein when the target focal plane is a meridional focal plane, the first direction is a vertical direction, and the second direction is a horizontal direction; and
when the target focal plane is a sagittal focal plane, the first direction is a horizontal direction, and the second direction is a vertical direction.

16. A detection apparatus, wherein the detection apparatus comprises an emitting module and a receiving module; and
the emitting module is configured to emit a line-shaped light beam, the receiving module is configured to receive the line-shaped light beam reflected by an object, and the receiving module comprises the receiving module according to any one of claims 1 to 15.

17. A radar, wherein the radar comprises the receiving module according to any one of claims 1 to 15.

18. A terminal device, wherein the terminal device comprises the receiving module according to any one of claims 1 to 15, or the detection apparatus according to claim 16, or the radar according to claim 17.

19. A vehicle end, wherein the vehicle end comprises the receiving module according to any one of claims 1 to 15, or the detection apparatus according to claim 16, or the radar according to claim 17, or the terminal device according to claim 18.
